(19) **Europäisches Patentamt European Patent Office Office européen des brevets**

(11) **EP 4 334 410 B1**

(12) **FASCICULE DE BREVET EUROPEEN**

(45) Date de publication et mention de la délivrance du brevet:
**11.06.2025 Bulletin 2025/24**

(21) Numéro de dépôt: **22724111.4**

(22) Date de dépôt: **28.04.2022**

(51) Classification Internationale des Brevets (IPC):
**C10G 1/00** *(2006.01)* **C10G 1/10** *(2006.01)*
**C10G 65/12** *(2006.01)* **C10G 9/36** *(2006.01)*
**C10G 69/06** *(2006.01)*

(52) Classification Coopérative des Brevets (CPC):
**C10G 1/002; C10G 1/10; C10G 9/36; C10G 65/12; C10G 69/06;** C10G 2300/1014; C10G 2300/1018; C10G 2300/205; Y02P 30/20

(86) Numéro de dépôt international:
**PCT/EP2022/061287**

(87) Numéro de publication internationale:
**WO 2022/233688 (10.11.2022 Gazette 2022/45)**

(54) **PROCEDE DE TRAITEMENT SIMULTANE D'HUILES DE PYROLYSE DE PLASTIQUES ET D'UNE CHARGE ISSUE DE SOURCES RENOUVELABLES**

VERFAHREN ZUR GLEICHZEITIGEN VERARBEITUNG VON KUNSTSTOFFPYROLYSEÖLEN UND EINES ROHSTOFFS AUS ERNEUERBAREN RESSOURCEN

PROCESS FOR THE SIMULTANEOUS PROCESSING OF PLASTICS PYROLYSIS OILS AND OF A FEEDSTOCK ORIGINATING FROM RENEWABLE RESOURCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2021 FR 2104874**

(43) Date de publication de la demande:
**13.03.2024 Bulletin 2024/11**

(73) Titulaire: **IFP Energies nouvelles**
**92500 Rueil-Malmaison (FR)**

(72) Inventeurs:
• **DE SOUSA DUARTE, Marisa**
**92852 RUEIL-MALMAISON CEDEX (FR)**
• **DECOTTIGNIES, Dominique**
**92852 RUEIL-MALMAISON CEDEX (FR)**
• **SOUCHON, Vincent**
**92852 RUEIL-MALMAISON CEDEX (FR)**
• **WEISS, Wilfried**
**92852 RUEIL-MALMAISON CEDEX (FR)**
• **BONNARDOT, Jérôme**
**92500 RUEIL-MALMAISON (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**WO-A1-2014/001632     US-A1- 2016 362 609**
**US-A1- 2019 161 683**

EP 4 334 410 B1

**Description**

**DOMAINE TECHNIQUE**

La présente invention concerne un procédé de traitement simultané d'une huile de pyrolyse de plastiques et d'une charge issue de sources renouvelables afin d'obtenir un effluent hydrocarboné qui peut être valorisé en étant directement intégré à un pool naphta ou diesel ou comme charge d'une unité de vapocraquage. Plus particulièrement, la présente invention concerne un procédé de traitement simultané d'une charge issue de la pyrolyse des déchets plastiques et d'une charge issue de sources renouvelables afin d'éliminer au moins en partie des impuretés que ces charges peuvent contenir en quantités relativement importantes.

**TECHNIQUE ANTERIEURE**

Les plastiques issus des filières de collecte et de tri peuvent subir une étape de pyrolyse afin d'obtenir entre autres des huiles de pyrolyse. Ces huiles de pyrolyse de plastiques sont généralement brûlées pour générer de l'électricité et/ou utilisées en tant que combustible dans des chaudières industrielles ou de chauffage urbain.

Une autre voie de valorisation des huiles de pyrolyse de plastiques est l'utilisation de ces huiles de pyrolyse de plastiques en tant que charge d'une unité de vapocraquage afin de (re)créer des oléfines, ces dernières étant des monomères constitutifs de certains polymères. Cependant, les déchets plastiques sont généralement des mélanges de plusieurs polymères, par exemple des mélanges de polyéthylène, de polypropylène, de polyéthylène téréphtalate, de polychlorure de vinyle, de polystyrène. De plus, en fonction des usages, les plastiques peuvent contenir, en plus des polymères, d'autres composés, comme des plastifiants, des pigments, des colorants ou encore des résidus de catalyseurs de polymérisation. Les déchets plastiques peuvent en outre contenir, de manière minoritaire, de sources renouvelables provenant par exemple des ordures ménagères. Le traitement des déchets d'une part, notamment le stockage, les traitements mécaniques, le tri, la pyrolyse, et aussi le stockage et le transport de l'huile de pyrolyse d'autre part peuvent également induire de la corrosion. Il en résulte que les huiles issues de la pyrolyse des déchets plastiques comprennent beaucoup d'impuretés, en particulier des dioléfines, des métaux, des métalloïdes, notamment du fer, du silicium, ou encore des composés halogénés, notamment des composés à base de chlore, des hétéroéléments comme du soufre, de l'oxygène et de l'azote, des insolubles, à des teneurs souvent élevées et incompatibles avec les unités de vapocraquage ou les unités situées en aval des unités de vapocraquage, notamment les procédés de polymérisation et les procédés d'hydrogénation sélective. Ces impuretés peuvent générer des problèmes d'opérabilité et notamment des problèmes de corrosion, de cokage ou de désactivation catalytique, ou encore des problèmes d'incompatibilité dans les usages des polymères cibles. La présence de dioléfines peut également conduire à des problèmes d'instabilité de l'huile de pyrolyse se caractérisant par la formation de gommes. Les gommes et les insolubles éventuellement présents dans l'huile de pyrolyse peuvent générer des problèmes de colmatage dans les procédés.

De plus, lors de l'étape de vapocraquage, les rendements en oléfines légères recherchées pour la pétrochimie, notamment l'éthylène et le propylène, dépendent fortement de la qualité des charges envoyées au vapocraquage. Le BMCI (Bureau of Mines Correlation Index selon la terminologie anglo-saxonne) est souvent utilisé pour caractériser les coupes hydrocarbonées. Cet indice, développé pour les produits hydrocarbonés issus de pétroles bruts, est calculé à partir de la mesure de la masse volumique et de la température moyenne d'ébullition : il est égal à 0 pour une paraffine linéaire et à 100 pour le benzène. Sa valeur est donc d'autant plus élevée que le produit analysé à une structure condensée aromatique, les naphtènes ayant un BMCI intermédiaire entre les paraffines et les aromatiques. Globalement, les rendements en oléfines légères augmentent quand la teneur en paraffines augmente et donc quand le BMCI diminue. A l'inverse, les rendements en composés lourds non recherchés et/ou en coke augmentent quand le BMCI augmente.

L'intégration dans le processus de raffinage de nouveaux produits d'origine végétale, issus de la conversion de sources renouvelables lignocellulosique ou issus de la production d'huiles végétales ou de graisses animales, a connu ces dernières décennies un très vif regain d'intérêt en raison de l'augmentation du coût des matières fossiles et du souhait de diminuer l'empreinte carbone du transport. Ainsi, de nombreux biocarburants (éthanol, esters méthyliques d'huiles végétales, huiles végétales hydrotraitées principalement) ont acquis un réel statut de complément aux bases pétrolières dans les pools carburants.

L'hydrotraitement des triglycérides et acides gras issus des charges d'origine biologique et/ou animale permet d'obtenir des paraffines longues qui peuvent éventuellement être hydroisomérisées en vue d'être incorporées dans des pools carburants de type jet ou diesel.

L'électrification rapide des véhicules de transport terrestre pourrait toutefois limiter le recours aux charges d'origine biologique dans les années à venir. Il y a donc un intérêt à trouver de nouvelles voies de valorisation.

Le document WO 2018/055555 propose un procédé de recyclage des déchets plastiques global, très général et relativement complexe, allant de l'étape même de pyrolyse des déchets plastiques jusqu'à l'étape de vapocraquage. Le procédé de la demande WO 2018/055555 comprend, entre autres, une étape d'hydrotraitement de la phase liquide issue directement de la pyrolyse, de préférence dans des conditions assez poussées notamment en termes de température, par exemple à une température comprise entre 260 et 300°C, une étape de séparation de l'effluent d'hydrotraitement puis une étape d'hydrodealkylation de l'effluent lourd séparé à une température de préférence élevée, par exemple comprise entre 260 et 400°C.

La demande de brevet non publiée FR20/01.758 décrit un procédé de traitement d'une huile de pyrolyse de plastiques, comprenant :

a) l'hydrogénation sélective de ladite charge en présence d'hydrogène et d'un catalyseur d'hydrogénation sélective pour obtenir un effluent hydrogéné ;

b) l'hydrotraitement dudit effluent hydrogéné en présence d'hydrogène et d'un catalyseur d'hydrotraitement, pour obtenir un effluent d'hydrotraitement ;

c) une séparation de l'effluent d'hydrotraitement en présence d'un flux aqueux, à une température entre 50 et 370°C, pour obtenir un effluent gazeux, un effluent liquide aqueux et un effluent liquide hydrocarboné ;

d) optionnellement une étape de fractionnement de tout ou partie de l'effluent hydrocarboné issu de l'étape c), pour obtenir un flux gazeux et au moins deux flux hydrocarbonés qui peuvent être une coupe naphta et une coupe plus lourde ;

e) une étape de recyclage comprenant une phase de récupération d'une fraction de l'effluent hydrocarboné issu de l'étape c) de séparation ou une fraction du et/ou d'au moins un des flux hydrocarboné(s) issu(s) de l'étape d) de fractionnement, vers l'étape a) d'hydrogénation sélective et/ou l'étape b) d'hydrotraitement.

Le document FR2910017 propose un procédé de traitement d'une charge pétrolière et d'une charge d'origine biologique dans lequel la charge pétrolière est injectée dans une section catalytique située en amont du point d'injection de la charge d'origine biologique. La solution proposée dans le document FR2910017 ne permet pas traiter une huile de pyrolyse de plastiques en mélange avec une charge d'origine biologique.

Ainsi, le traitement simultané d'une huile de pyrolyse de plastiques et d'une charge issue de sources renouvelables permet un traitement optimisé des deux charges en traitant efficacement les impuretés présentes et en convertissant les charges en des produits valorisables. Ces produits peuvent notamment être utilisés comme charges d'unité de vapocraquage en vue de produire des oléfines qui après polymérisation permettront d'obtenir non seulement des polymères recyclés du fait de l'origine plastiques de l'huile de pyrolyse mais aussi des polymères à impact environnemental réduit du fait de l'origine biologique. Ces produits peuvent également être valorisés comme base dans des pools carburants.

WO2014001632 divulgue un procédé de traitement de biomasse pouvant contenir des polymères.

**RESUME DE L'INVENTION**

L'invention concerne un procédé de traitement d'une charge comprenant une huile de pyrolyse de plastiques et une charge issue de sources renouvelables comprenant :

a) optionnellement, une étape d'hydrogénation sélective mise en œuvre dans une section réactionnelle alimentée au moins par ladite charge comprenant une huile de pyrolyse de plastiques et un flux gazeux comprenant de l'hydrogène, en présence d'au moins un catalyseur d'hydrogénation sélective, à une température entre 80 et 280°C, une pression partielle d'hydrogène entre 1,0 et 20,0 MPa abs. et une vitesse volumique horaire entre 0,3 et 10,0 h$^{-1}$, pour obtenir un effluent hydrogéné,

b) une étape d'hydrodémétallation mise en œuvre dans une section réactionnelle d'hydrodémétallation comprenant au moins un catalyseur d'hydrodémétallation, ladite section réactionnelle d'hydrodémétallation étant alimentée au moins par ladite charge comprenant une huile de pyrolyse de plastiques et/ou l'effluent hydrogéné issu de l'étape a), et un flux gazeux comprenant de l'hydrogène, ladite section réactionnelle d'hydrodémétallation étant mise en œuvre à une température moyenne entre 140 et 400°C, une pression partielle d'hydrogène entre 1,0 et 20,0 MPa abs. et une vitesse volumique horaire entre 0,1 et 10,0 h$^{-1}$, pour obtenir un effluent démétallé,

c) une étape d'hydrotraitement mise en œuvre dans une section réactionnelle d'hydrotraitement comprenant au moins un catalyseur d'hydrotraitement, ladite section réactionnelle d'hydrotraitement étant alimentée au moins par ledit effluent démétallé issu de l'étape b), et un flux gazeux comprenant de l'hydrogène, ladite section réactionnelle d'hydrotraitement étant mise en œuvre à une température entre 250 et 450°C, une pression partielle d'hydrogène entre 1,0 et 20,0 MPa abs. et une vitesse volumique horaire entre 0,1 et 10,0 h$^{-1}$, pour obtenir un effluent d'hydrotraité,

et dans lequel ladite charge issue de sources renouvelables est introduite en mélange ou non avec ladite charge comprenant une huile de pyrolyse de plastiques dans l'étape a) et/ou dans l'étape b) et/ou dans l'étape c),
le ratio massique entre le débit de charge comprenant l'huile de pyrolyse de plastiques et le débit de charge issue de sources renouvelables introduit étant compris entre 0,05 et 20,

c') optionnellement une étape d'hydrocraquage mise en œuvre dans une section réactionnelle d'hydrocraquage comprenant au moins un catalyseur d'hydrocraquage, ladite section réactionnelle d'hydrocraquage étant alimentée au moins par ledit effluent hydrotraité issu de l'étape c) et/ou par la coupe comprenant des composés ayant un point d'ébullition supérieur à 175°C issue de l'étape e) et un flux gazeux comprenant de l'hydrogène, ladite section réactionnelle d'hydrocraquage étant mise en œuvre à une température entre 250 et 450°C, une pression partielle d'hydrogène entre 1,5 et 20,0 MPa abs. et une vitesse volumique horaire entre 0,1 et 10,0 h$^{-1}$, pour obtenir un effluent hydrocraqué qui est envoyé dans l'étape d) de séparation,

d) une étape de séparation, alimentée par l'effluent hydrotraité issu de l'étape c) et/ou par l'effluent hydrocraqué issu de l'étape c') et une solution aqueuse, ladite étape étant opérée à une température entre 50 et 450°C, pour obtenir au moins un effluent gazeux, un effluent aqueux et un effluent hydrocarboné,

e) optionnellement une étape de fractionnement de tout ou partie de l'effluent hydrocarboné issu de l'étape d), pour obtenir au moins un effluent gazeux et au moins une coupe comprenant des composés ayant un point d'ébullition inférieur ou égal à 175°C et une coupe hydrocarbonée comprenant des composés ayant un point d'ébullition supérieur à 175°C.

Un avantage du procédé selon l'invention est de purifier simultanément une charge comprenant une huile issue de la pyrolyse de déchets plastiques et une charge issue de sources renouvelables afin d'éliminer au moins une partie des impuretés et d'hydrogéner ces charges et ainsi de pouvoir valoriser les produits obtenus en particulier en les incorporant directement à un pool carburant et/ou en les rendant compatibles à un traitement dans une unité de vapocraquage afin de pouvoir obtenir en particulier des oléfines légères avec des rendements accrus qui pourront servir de monomères dans la fabrication de polymères.

Le procédé selon l'invention se distingue notamment par une grande flexibilité permettant d'introduire la charge issue de ressources renouvelables selon ses impuretés dans différentes étapes du procédé. En effet, lorsque la charge issue de ressources renouvelables contient beaucoup d'impuretés, elle peut être en partie ou en totalité introduite dans l'étape a) et/ou l'étape b). Lorsqu'un tel traitement n'est pas nécessaire, la charge issue de ressources renouvelables peut également en partie ou en totalité être introduite dans l'étape c).

Un autre avantage de l'invention est de limiter l'augmentation de température entre l'entrée et la sortie d'un réacteur à écoulement de type piston, par exemple un lit fixe, induite notamment par la chaleur dégagée par l'hydrotraitement de la charge issue de sources renouvelables, cette chaleur étant en partie absorbée par l'huile de pyrolyse de plastiques qui est traitée simultanément. Il en résulte un procédé optimisé et limitant le recours important au recycle d'effluent et/ou aux flux refroidissants gazeux et/ou liquide.

Le procédé de l'invention permet ainsi d'obtenir un effluent hydrocarboné issu d'une huile de pyrolyse de plastiques et d'une charge issue de sources renouvelables débarrassé au moins en partie des impuretés de départ, limitant ainsi les problèmes d'opérabilité, comme les problèmes de corrosion, de cokage ou de désactivation catalytique, que peuvent engendrer ces impuretés, en particulier dans les unités vapocraquage et/ou dans les unités situées en aval des unités de vapocraquage, notamment les unités de polymérisation et d'hydrogénation. L'élimination d'au moins une partie des impuretés des huiles issues de la pyrolyse des déchets plastiques et des charges issues de sources renouvelables permettra aussi d'augmenter la gamme des applications des polymères cibles, les incompatibilités d'usages étant réduites.

Selon une variante, le procédé selon l'invention comprend l'étape e) de fractionnement. Selon une variante, le procédé selon l'invention comprend l'étape c') d'hydrocraquage. Selon une variante, le procédé selon l'invention comprend ladite étape a) d'hydrogénation sélective.

Selon une variante, la charge issue de sources renouvelables est une charge comprenant une huile et/ou une graisse d'origine végétale et/ou animale.

Selon une variante, au moins une partie de la charge issue de ressources renouvelables est introduite dans l'étape c).

Selon une variante, la température de la section réactionnelle de l'étape c) est supérieure à la température de la section réactionnelle d'hydrodémétallation de l'étape b).

Selon une variante, au moins une fraction de l'effluent hydrocarboné issu de l'étape d) de séparation ou au moins une fraction de la coupe naphta comprenant des composés ayant un point d'ébullition inférieur ou égal à 175°C issue de l'étape e) de fractionnement est envoyée en tant que flux de recycle vers l'étape a) d'hydrogénation sélective et/ou l'étape b) d'hydrodémétallation et/ou l'étape c) d'hydrotraitement.

Selon une variante, au moins une fraction de la coupe comprenant des composés ayant un point d'ébullition supérieur à 175°C issue de l'étape e) de fractionnement est envoyée en tant que flux de recycle vers l'étape b) d'hydrodémétallation, et/ou l'étape c) d'hydrotraitement et /ou l'étape c') d'hydrocraquage.

Selon une variante, le rapport pondéral entre le flux de recycle et la charge comprenant une huile de pyrolyse de plastiques et une charge de sources renouvelables est inférieur ou égal à 10.

Selon une variante, le procédé selon l'invention comprend une étape a0) de prétraitement de la charge, ladite étape de prétraitement étant mise en œuvre en amont de l'étape a) d'hydrogénation sélective et comprenant une étape de filtration et/ou une étape de séparation électrostatique et/ou une étape d'un lavage à l'aide d'une solution aqueuse et/ou une étape d'adsorption.

Selon une variante, l'effluent hydrocarboné issu de l'étape d) de séparation, ou au moins l'un des deux flux hydrocarboné(s) liquides issu(s) de l'étape e), est en tout ou partie envoyé vers une étape f) de vapocraquage réalisée dans au moins un four de pyrolyse à une température comprise entre 700 et 900°C et à une pression comprise entre 0,05 et 0,3 MPa relatif.

Selon une variante, ledit catalyseur d'hydrogénation sélective comprend un support choisi parmi l'alumine, la silice, les silices-alumines, la magnésie, les argiles et leurs mélanges et une fonction hydro-déshydrogénante comprenant soit au moins un élément du groupe VIII et au moins un élément du groupe VIB, soit au moins un élément du groupe VIII.

Selon une variante, ledit catalyseur d'hydrodémétallation et ledit catalyseur d'hydrotraitement comprend un support choisi dans le groupe constitué par l'alumine, la silice, les silices-alumines, la magnésie, les argiles et leurs mélanges, et une fonction hydro-déshydrogénante comprenant au moins un élément du groupe VIII et/ou au moins un élément du groupe VIB.

Selon une variante, le procédé selon l'invention comprend en outre une deuxième étape d'hydrocraquage c") mise en œuvre dans une section réactionnelle d'hydrocraquage comprenant au moins un catalyseur d'hydrocraquage, ladite section réactionnelle d'hydrocraquage étant alimentée par la coupe comprenant des composés ayant un point d'ébullition supérieur à 175°C issue de l'étape e) et un flux gazeux comprenant de l'hydrogène, ladite section réactionnelle d'hydrocraquage étant mise en œuvre à une température entre 250 et 450°C, une pression partielle d'hydrogène entre 1,5 et 20,0 MPa abs. et une vitesse volumique horaire entre 0,1 et 10,0 h$^{-1}$, pour obtenir un effluent hydrocraqué qui est envoyé dans l'étape d) de séparation.

Selon une variante, ledit catalyseur d'hydrocraquage comprend un support choisi parmi les alumines halogénées, les combinaisons d'oxydes de bore et d'aluminium, les silice-alumines amorphes et les zéolithes et une fonction hydro-déshydrogénante comprenant au moins un métal du groupe VIB choisi parmi le chrome, le molybdène et le tungstène, seul ou en mélange, et/ou au moins un métal du groupe VIII choisi parmi le fer, le cobalt, le nickel, le ruthénium, le rhodium, le palladium et le platine.

Selon une variante, la charge a les propriétés suivantes :

- une teneur en aromatiques comprise entre 0 et 90 % poids,
- une teneur en halogénés comprise entre 2 et 5000 ppm poids,
- une teneur en éléments métalliques comprise entre 10 et 10000 ppm poids,
- dont une teneur en élément fer comprise entre 0 et 100 ppm poids,
- une teneur en élément silicium comprise entre 0 et 1000 ppm poids.

Selon une variante, le produit comporte par rapport au poids total du produit :

- une teneur totale en éléments métalliques inférieure ou égale à 5,0 ppm poids,
- dont une teneur en élément fer inférieure ou égale à 100 ppb poids,
- une teneur en élément silicium inférieure ou égale à 1,0 ppm poids,
- une teneur en soufre inférieure ou égale à 500 ppm poids,
- une teneur en azote inférieure ou égale à 100 ppm poids,
- une teneur en élément chlore inférieure ou égale à 10 ppm poids.

Selon la présente invention, les pressions sont des pressions absolues, encore notées abs., et sont données en MPa absolus (ou MPa abs.), sauf indication contraire.

Selon la présente invention, les expressions « compris entre ... et ... » et « entre .... et ... » sont équivalentes et signifient que les valeurs limites de l'intervalle sont incluses dans la gamme de valeurs décrite. Si tel n'était pas le cas et que les valeurs limites n'étaient pas incluses dans la gamme décrite, une telle précision sera apportée par la présente invention. Dans le sens de la présente invention, les différentes plages de paramètre pour une étape donnée tels que les plages de pression et les plages température peuvent être utilisés seul ou en combinaison. Par exemple, dans le sens de la présente invention, une plage de valeurs préférées de pression peut être combinée avec une plage de valeurs de température plus préférées.

Dans la suite, des modes de réalisation particuliers et/ou préférés de l'invention peuvent être décrits. Ils pourront être mis en œuvre séparément ou combinés entre eux, sans limitation de combinaison lorsque c'est techniquement réalisable.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

La teneur en métaux est mesurée par fluorescence X.

## DESCRIPTION DETAILLEE

### La charge

Selon l'invention, la charge traitée dans le procédé selon l'invention est une charge comprenant une huile de pyrolyse de plastiques et une charge issue de sources renouvelables.

L'« huile de pyrolyse de plastiques » est une huile issue de la pyrolyse de plastiques, de préférence de déchets plastiques provenant notamment de filières de collecte et de tri. Elle comprend en particulier un mélange de composés hydrocarbonés, notamment des paraffines, des mono- et/ou di-oléfines, des naphtènes et des aromatiques. Au moins 80% poids de ces composés hydrocarbonés ont de préférence un point d'ébullition inférieur à 700°C, et de manière préférée inférieur à 550°C. En particulier, selon l'origine de l'huile de pyrolyse, celle-ci peut comprendre jusqu'à 70% poids en paraffines, jusqu'à 90 % poids en oléfines et jusqu'à 90 % poids en aromatiques, étant entendu que la somme des paraffines, des oléfines et des aromatiques est 100 % poids des composées hydrocarbonés.

La densité de l'huile de pyrolyse, mesurée à 15°C selon la méthode ASTM D4052, est généralement comprise entre 0,75 et 0,99 g/cm$^3$, de préférence comprise entre 0,75 et 0,95 g/cm$^3$.

L'huile de pyrolyse de plastiques peut comprendre, et le plus souvent comprend, en outre des impuretés comme des métaux, notamment du fer, du silicium, des composés halogénés, notamment des composés chlorés. Ces impuretés peuvent être présentes dans l'huiles de pyrolyse de plastiques à des teneurs élevées, par exemple jusqu'à 350 ppm poids ou encore 700 ppm poids voire 1000 ppm poids d'éléments halogène (notamment du chlore) apportés par des composés halogénés, jusqu'à 100 ppm poids, voire 200 ppm poids d'éléments métalliques ou semi-métalliques. Les métaux alcalins, les alcalinoterreux, les métaux de transition, les métaux pauvres et les métalloïdes peuvent être assimilés aux contaminants de nature métallique, appelés métaux ou éléments métalliques ou semi métalliques. De manière particulière, les métaux ou éléments métalliques ou semi métalliques, éventuellement contenus dans les huiles issues de la pyrolyse des déchets plastiques, comprennent du silicium, du fer ou ces deux éléments. L'huile de pyrolyse de plastiques peut également comprendre d'autres impuretés comme des hétéroéléments apportés notamment par des composés soufrés, des composés oxygénés et/ou des composés azotés, à des teneurs généralement inférieures à 10000 ppm poids d'hétéroéléments et de préférence inférieures à 4000 ppm poids d'hétéroéléments.

L'huile de pyrolyse de plastiques peut être issue d'un traitement de pyrolyse thermique, catalytique ou encore être préparée par hydropyrolyse (pyrolyse en présence d'un catalyseur et d'hydrogène).

La charge traitée dans le procédé selon l'invention comprend également une charge issue de sources renouvelables.

Selon une première variante, la charge issue de sources renouvelables est avantageusement choisie parmi une huile ou une graisse d'origine végétale et/ou animale. L'huile ou la graisse d'origine végétale et/ou animale utilisée dans la présente invention contient des triglycérides et/ou des acides gras libres et/ou des esters. Les huiles végétales peuvent avantageusement être brutes ou raffinées, totalement ou en partie, et issues des végétaux suivants : colza, tournesol, soja, palme, palmiste, olive, noix de coco, jatropha, cette liste n'étant pas limitative. Les huiles d'algues ou de poisson sont également pertinentes. Les graisses animales sont avantageusement choisies parmi le lard ou les graisses composées de résidus de l'industrie alimentaire ou issus des industries de la restauration.

Ces charges contiennent essentiellement des structures chimiques de type triglycérides que l'homme du métier connait également sous l'appellation tri ester d'acides gras et/ou des acides gras libres. Un tri ester d'acide gras est ainsi composé de trois chaînes d'acides gras. Ces chaînes d'acide gras sous forme de tri ester ou sous forme d'acide gras libre possèdent un nombre d'insaturations par chaîne, également appelé nombre de doubles liaisons carbone-carbone par chaîne, généralement compris entre 0 et 3 mais qui peut être plus élevé notamment pour les huiles issues d'algues qui présentent généralement un nombre d'insaturations par chaînes de 5 à 6.

Les molécules présentes dans les charges comprenant une huile ou une graisse d'origine végétale et/ou animale utilisées dans la présente invention présentent donc un nombre d'insaturations par molécule avantageusement compris entre 0 et 18. Dans ces charges, le ratio entre la somme des nombres d'insaturations de toutes les molécules et le nombre de molécules est avantageusement compris entre 0 et 6.

Selon une deuxième variante, la charge issue de sources renouvelables est avantageusement choisie parmi des charges provenant des procédés de conversions thermiques et/ou catalytiques de biomasse lignocellulosique, tel que des huiles qui sont produits à partir de biomasse lignocellulosique, avec diverses méthodes de liquéfaction, telles que la liquéfaction hydrothermale ou la pyrolyse. Le terme «biomasse» fait référence à un matériau dérivé d'organismes récemment vivants, qui comprend les plantes, les animaux et leurs sous-produits. Le terme «biomasse lignocellulosique» désigne des sources renouvelables dérivés de plantes ou de leurs sous-produits. Les sources renouvelables lignocellulosiques sont composées de polymères glucidiques (cellulose, hémicellulose) et d'un polymère aromatique (lignine).

Ces charges issues de sources renouvelables peuvent être brutes, raffinées ou semi-raffinées et elles contiennent également des impuretés, notamment des phospholipides, des alcalins, des alcalino-terreux, notamment du fer, phosphore, du sodium, du calcium, du magnésium. De préférence, la charge issue de sources renouvelables est une charge comprenant une huile et/ou une graisse d'origine végétale et/ou animale.

La charge du procédé selon l'invention comprend au moins une huile de pyrolyse de plastiques et au moins une charge issue de sources renouvelables. Ladite charge peut être constituée uniquement d'huile(s) de pyrolyse de plastiques et de charge(s) issue(s) de sources renouvelables. De préférence, ladite charge comprend au moins 50% poids, de manière préférée entre 75 et 100% poids, d'huile(s) de pyrolyse de plastiques et de charge(s) issue(s) de sources renouvelables, c'est-à-dire de préférence entre 50 et 100% poids, de manière préférée entre 70% et 100% poids de d'huile de pyrolyse de plastiques et de charge(s) issue(s) de sources renouvelables.

Le ratio massique entre le débit de charge comprenant l'huile de pyrolyse de plastiques et le débit de charge(s) issue de sources renouvelables introduit dans le procédé selon l'invention est généralement compris entre 0,02 et 50, le plus souvent entre 0,05 et 20, et de manière préférée entre 0,1 et 10. On entend par ce ratio massique le ratio massique total introduit dans le procédé selon l'invention, peu importe l'étape dans laquelle la charge issue de sources renouvelables est introduite.

La charge du procédé selon l'invention peut comprendre en outre une charge pétrolière conventionnelle qui est alors co-traitée avec l'huile de pyrolyse de plastiques et la charge issue de sources renouvelables. La charge pétrolière conventionnelle peut avantageusement être une coupe ou un mélange de coupes de type naphta, gazole ou gazole sous vide. Dans ce cas, la charge pétrolière peut être injectée dans les étapes a) et/ou b), et/ou c) et/ou c'), et de préférence dans l'étape c).

### Prétraitement (optionnel)

Ladite charge comprenant une huile de pyrolyse de plastiques et/ou une charge issue de ressources renouvelables peut avantageusement être prétraitée dans une étape optionnelle de prétraitement a0), préalablement à l'étape a) d'hydrogénation sélective, pour obtenir au moins une charge prétraitée qui alimente l'étape a) ou l'étape b).

La charge prétraitée dans l'étape optionnelle a0) peut notamment comprendre :

- un mélange d'huile de pyrolyse de plastiques et de charge issue de sources renouvelables,
- une charge comprenant une huile de pyrolyse de plastiques sans charge issue de sources renouvelables,
- une charge issue de sources renouvelables sans huile de pyrolyse de plastiques,
- deux flux distincts dont l'un comprenant une huile de pyrolyse de plastiques et l'autre comprenant la charge issue de sources renouvelables, ces deux flux étant traités en parallèle dans l'étape de prétraitement a0) dans des conditions et opérations différentes de mise en œuvre.

Lorsque la charge prétraitée dans l'étape optionnelle a0) est une charge comprenant une huile de pyrolyse de plastiques sans charge issue de sources renouvelables, la charge issue de sources renouvelables peut être introduite dans l'étape a) et/ou dans l'étape b) et/ou dans l'étape c) tandis que la charge comprenant une huile de pyrolyse de plastiques prétraitée est introduite dans l'étape a) optionnelle ou dans l'étape b).

Lorsque la charge prétraitée dans l'étape optionnelle a0) est une charge issue de sources renouvelables sans huile de pyrolyse de plastiques, la charge comprenant une huile de pyrolyse de plastiques peut être introduite dans l'étape a) optionnelle ou dans l'étape b) tandis que la charge issue de sources renouvelables prétraitée peut être introduite dans l'étape a) et/ou dans l'étape b) et/ou dans l'étape c).

Cette étape optionnelle de prétraitement a0) permet de diminuer la quantité de contaminants, en particulier la quantité de fer et/ou de silicium et/ou de chlore et/ou de phosphore et/ou de sodium et/ou de calcium, éventuellement présents dans la charge comprenant une huile de pyrolyse de plastiques et/ou dans la charge issue de sources renouvelables. Ainsi, une étape optionnelle a0) de prétraitement de la charge comprenant une huile de pyrolyse de plastiques et/ou la charge issue de sources renouvelables est avantageusement réalisée en particulier lorsque ladite charge comprend plus de 10 ppm poids, notamment plus de 20 ppm poids, plus particulièrement plus de 50 ppm poids d'éléments métalliques, et en particulier lorsque ladite charge comprend plus de 5 ppm poids de silicium, plus particulièrement plus de 10 ppm poids, voire plus de 20 ppm poids de silicium. De même, une étape optionnelle a0) de prétraitement est avantageusement réalisée en particulier lorsque ladite charge comprend plus de 10 ppm poids, notamment plus de 20 ppm poids, plus particulièrement plus de 50 ppm poids de chlore. De même, une étape optionnelle a0) de prétraitement est avantageusement réalisée en particulier lorsque ladite charge comprend plus de 100 ppm poids, notamment plus de 200 ppm poids, plus particulièrement plus de 500 ppm poids de phosphore. De même, une étape optionnelle a0) de prétraitement de la charge est avantageusement réalisée en particulier lorsque ladite charge comprend des espèces acides conduisant à une valeur de TAN (Total Acid Number selon la terminologie anglo-saxonne) supérieure à 1 mg de KOH/g, voire supérieure à 3 mg de KOH/g, voire supérieure à 6 mg de KOH/g.

Ladite étape optionnelle de prétraitement a0) peut être mise en œuvre par n'importe quelle méthode connue par l'homme du métier permettant de diminuer la quantité de contaminants. Elle peut notamment comprendre une étape de filtration et/ou une étape de séparation électrostatique et/ou une étape d'un lavage à l'aide d'une solution aqueuse et/ou une étape d'adsorption.

Ladite étape optionnelle de prétraitement a0) est avantageusement mise en œuvre à une température entre 0 et 150°C, de préférence entre 5 et 100°C, et à une pression entre 0,15 et 10,0 MPa abs, de préférence entre 0,2 et 1,0 MPa abs.

Selon une variante, ladite étape optionnelle de prétraitement a0) est mise en œuvre dans une section d'adsorption opérée en présence d'au moins un adsorbant, de préférence de type alumine, ayant une surface spécifique supérieure ou égale à 100 m$^2$/g, de préférence supérieure ou égale à 200 m$^2$/g. La surface spécifique dudit au moins adsorbant est avantageusement inférieure ou égale à 600 m$^2$/g, en particulier inférieure ou égale à 400 m$^2$/g. La surface spécifique de l'adsorbant est une surface mesurée par la méthode BET, c'est-à-dire la surface spécifique déterminée par adsorption d'azote conformément à la norme ASTM D 3663-78 établie à partir de la méthode BRUNAUER-EMMETT-TELLER décrite dans le périodique 'The Journal of the American Chemical Society", 6Q, 309 (1938).

Avantageusement, ledit adsorbant comprend moins de 1% poids d'éléments métalliques, de préférence est exempt d'éléments métalliques. Par éléments métalliques de l'adsorbant, il faut entendre les éléments des groupes 6 à 10 du tableau périodique des éléments (nouvelle classification IUPAC). Le temps de séjour de la charge dans la section d'adsorbant est généralement compris entre 1 et 180 minutes.

Ladite section d'adsorption de l'étape optionnelle a0) comprend au moins une colonne d'adsorption, de préférence comprend au moins deux colonnes d'adsorption, préférentiellement entre deux et quatre colonnes d'adsorption, contenant ledit adsorbant. Lorsque la section d'adsorption comprend deux colonnes d'adsorption, un mode de fonctionnement peut être un fonctionnement appelé « en swing », selon le terme anglo-saxon consacré, dans lequel l'une des colonnes est en ligne, c'est-à-dire en fonctionnement, tandis que l'autre colonne est en réserve. Lorsque l'absorbant de la colonne en ligne est usé, cette colonne est isolée tandis que la colonne en réserve est mise en ligne, c'est-à-dire en fonctionnement. L'absorbant usé peut être ensuite régénéré *in situ* et/ou remplacé par de l'absorbant frais pour que la colonne le contenant puisse à nouveau être remise en ligne une fois que l'autre colonne aura été isolée.

Un autre mode de fonctionnement est d'avoir au moins deux colonnes fonctionnant en série. Lorsque l'absorbant de la colonne placée en tête est usé, cette première colonne est isolée et l'absorbant usée est soit régénéré *in situ* ou remplacé par de l'absorbant frais. La colonne est ensuite remise en ligne en dernière position et ainsi de suite. Ce fonctionnement est appelé mode permutable, ou selon le terme anglais « PRS » pour Permutable Reactor System ou encore « lead and lag » selon le terme anglo-saxon consacré. L'association d'au moins deux colonnes d'adsorption permet de palier à l'empoisonnement et/ou au colmatage possible et éventuellement rapide de l'adsorbant sous l'action conjointe des contaminants métalliques, des dioléfines, des gommes issues des dioléfines, du phosphore, du sodium, du calcium et des insolubles éventuellement présents dans ladite charge à traiter. La présence d'au moins deux colonnes d'adsorption facilite en effet le remplacement et/ou la régénération de l'adsorbant, avantageusement sans arrêt de l'unité de prétraitement, voire du procédé, permettant ainsi de diminuer les risques de colmatage et donc d'éviter l'arrêt de l'unité dû au colmatage, de maitriser les coûts et de limiter la consommation d'adsorbant.

Selon une autre variante, ladite étape optionnelle de prétraitement a0) est mise en œuvre dans une section de lavage par mise en contact de la charge avec au moins un liquide de lavage pouvant être un solvant organique ou une solution aqueuse ou une solution aqueuse comprenant des composés organiques. De manière préférée, le liquide de lavage est une solution aqueuse qui peut être par exemple de l'eau, de préférence déminéralisée et désaérée, ou une solution acide ou basique. Cette section de lavage peut comporter des équipements permettant de mettre en contact la charge avec le liquide de lavage et de séparer les phases de manière à obtenir la charge prétraitée d'une part et le liquide de lavage comprenant des impuretés d'autre part. Parmi ces équipements, il peut y avoir par exemple un réacteur agité, un décanteur, un mélangeur-décanteur, une colonne de lavage à co- ou contre-courant. Avantageusement, la colonne de lavage est une colonne garnie, une colonne à plateaux, une colonne agitée ou une colonne pulsée ; le ratio entre la quantité de liquide de lavage et la quantité de charge étant compris entre 0,01 et 100, de préférence entre 0,1 et 10 et de manière préférée entre 0,15 et 2.

Ladite étape optionnelle a0) de prétraitement peut également être éventuellement alimentée par au moins une fraction d'un flux de recycle, avantageusement issu de l'étape d) ou de l'étape e) optionnelle du procédé, en mélange ou séparément de la charge comprenant une huile de pyrolyse de plastiques et/ou une charge issue de ressources renouvelables.

Ladite étape optionnelle a0) de prétraitement permet ainsi d'obtenir une charge prétraitée qui alimente ensuite l'étape a) d'hydrogénation sélective ou b) d'hydrodémétallation.

**Etape a) d'hydrogénation sélective (optionnelle)**

Selon l'invention, le procédé peut comprendre une étape a) d'hydrogénation sélective de la charge comprenant une huile de pyrolyse de plastiques, et éventuellement de la charge issue de ressources renouvelables lorsque cette dernière est injectée dans l'étape a), réalisée en présence d'hydrogène, dans des conditions de pression en hydrogène et de température permettant de maintenir ladite charge en phase liquide et avec une quantité d'hydrogène soluble juste nécessaire à une hydrogénation sélective des dioléfines présentes dans ladite charge. L'hydrogénation sélective d'au moins une partie des dioléfines en phase liquide permet ainsi d'éviter ou au moins de limiter la formation de « gommes », c'est-à-dire la polymérisation des dioléfines et donc la formation d'oligomères et polymères, pouvant boucher la section réactionnelle de l'étape b) d'hydrodémétallation et /ou l'étape c) d'hydrotraitement. Les composés styréniques, notamment le styrène, éventuellement présents dans la charge peuvent également se comporter comme les dioléfines en termes de formation de gommes du fait que la double liaison du groupement vinyle est conjuguée avec le noyau aromatique. Ladite étape a) d'hydrogénation sélective permet d'obtenir un effluent hydrogéné sélectivement, c'est-à-dire un effluent à teneur réduite en oléfines, en particulier en dioléfines et éventuellement en styrène.

Selon l'invention, ladite étape a) d'hydrogénation sélective est mise en œuvre dans une section réactionnelle alimentée au moins par ladite charge comprenant une huile de pyrolyse de plastiques, éventuellement prétraitée, et un flux gazeux comprenant de l'hydrogène ($H_2$).

Eventuellement, la section réactionnelle de ladite étape a) peut également être alimentée en outre par au moins une partie de la charge issue de ressources renouvelables, éventuellement prétraitée.

Eventuellement, la section réactionnelle de ladite étape a) peut également être alimentée en outre par au moins une fraction d'un flux de recycle, avantageusement issu de l'étape d) ou de l'étape e) optionnelle du procédé.

L'alimentation de la charge issue de ressources renouvelables et/ou du flux de recycle peut se faire soit en mélange avec ladite charge comprenant une huile de pyrolyse de plastiques, soit séparément de ladite charge, avantageusement directement en entrée de la section réactionnelle de l'étape a).

Ladite section réactionnelle met en œuvre une hydrogénation sélective, de préférence en lit fixe, en présence d'au moins un catalyseur d'hydrogénation sélective, avantageusement à une température moyenne (ou WABT telle que définie ci-dessous) entre 80 et 280°C, de préférence entre 120 et 260°C, de manière préférée entre 130 et 250°C, une pression partielle d'hydrogène entre 1,0 et 20,0 MPa abs, de manière préférée entre 5,0 et 15,0 MPa abs et à une vitesse volumique horaire (VVH) entre 0,3 et 10,0 h$^{-1}$, de manière préférée entre 0,5 et 5,0 h$^{-1}$.

Selon l'invention, la « température » d'une section réactionnelle comprenant au moins un réacteur à lit fixe est la température moyenne d'une section réactionnelle comprenant au moins un réacteur à lit fixe et correspond à la Weight Average Bed Temperature (WABT) selon le terme anglo-saxon consacré, bien connue de l'Homme du métier. La température moyenne est avantageusement déterminée en fonction des systèmes catalytiques, des équipements, de la configuration de ceux-ci, utilisés. La température moyenne (ou WABT) est calculée de la manière suivante :

$$WABT = (T_{entrée} + T_{sortie})/2$$

avec $T_{entrée}$ : la température de l'effluent en entrée de la section réactionnelle et $T_{sortie}$ : la température de l'effluent en sortie de section réactionnelle.

La vitesse volumique horaire (VVH) est définie ici comme le ratio entre le débit volumique horaire de la charge entrant dans la section réactionnelle par le volume de catalyseur(s). On entend ici par « charge entrant dans la section réactionnelle de l'étape a)» la totalité de la charge « fraîche » éventuellement prétraitée, c'est-à-dire comprenant au moins l'huile de pyrolyse et éventuellement une partie ou la totalité de la charge issue de ressources renouvelables, éventuellement complétée avec un flux de recycle issu des étapes d) et/ou e).

La quantité du flux gazeux comprenant de l'hydrogène ($H_2$), alimentant ladite section réactionnelle de l'étape a), est avantageusement telle que la couverture en hydrogène est comprise entre 1 et 200 Nm$^3$ d'hydrogène par m$^3$ de charge entrant dans la section réactionnelle (Nm$^3$/m$^3$), de préférence entre 1 et 50 Nm$^3$ d'hydrogène par m$^3$ de charge (Nm$^3$/m$^3$), de manière préférée entre 5 et 20 Nm$^3$ d'hydrogène par m$^3$ de charge (Nm$^3$/m$^3$).

La couverture en hydrogène est définie comme le rapport du débit volumique d'hydrogène pris dans les conditions normales de température et pression par rapport au débit volumique de charge entrant dans la section réactionnelle éventuellement prétraitée, sans tenir compte de l'éventuelle fraction recyclée, à 15°C (en normaux m$^3$, noté Nm$^3$, de $H_2$ par m$^3$ de charge).

Le flux gazeux comprenant de l'hydrogène, qui alimente la section réactionnelle de l'étape a), peut être constitué d'un appoint en hydrogène et/ou d'hydrogène recyclé avantageusement issu de l'étape d) ou de l'étape e) optionnelle.

L'étape a) d'hydrogénation sélective est de préférence effectuée en lit fixe. Elle peut également être effectuée en lit bouillonnant ou en lit mobile.

Avantageusement, la section réactionnelle de ladite étape a) comprend entre 1 et 5 réacteurs. Selon un mode de réalisation particulier de l'invention, la section réactionnelle comprend entre 2 et 5 réacteurs, qui fonctionnent en mode permutable, appelé selon le terme anglais « PRS » pour Permutable Reactor System ou encore « lead and lag ». L'association d'au moins deux réacteurs en mode PRS permet d'isoler un réacteur, de décharger le catalyseur usé, de recharger le réacteur en catalyseur frais et remettre en service ledit réacteur sans arrêt du procédé. La technologie PRS est décrite, en particulier, dans le brevet FR2681871.

Selon une variante particulièrement préférée, la section réactionnelle d'hydrogénation sélective de l'étape a) comprend deux réacteurs à lit fixe fonctionnent en mode permutable.

Avantageusement, des internes de réacteurs, par exemple de type plateaux filtrants, peuvent être utilisés pour prévenir le bouchage du(des) réacteur(s). Un exemple de plateau filtrant est décrit dans le brevet FR3051375.

Avantageusement, ledit catalyseur d'hydrogénation sélective comprend un support, de préférence minéral, et une fonction hydro-déshydrogénante.

Selon une variante, la fonction hydro-déshydrogénante comprend en particulier au moins un élément du groupe VIII, de préférence choisi parmi le nickel et le cobalt, et au moins un élément du groupe VIB, de préférence choisi parmi le molybdène et le tungstène. Selon cette variante, la teneur totale exprimée en oxydes des éléments métalliques des groupes VIB et VIII est de préférence comprise entre 1% et 40% en poids, préférentiellement de 5% à 30% en poids par rapport au poids total du catalyseur. Lorsque le métal est le cobalt ou le nickel, la teneur en métal s'exprime en CoO et NiO respectivement. Lorsque le métal est le molybdène ou le tungstène, la teneur en métal s'exprime en $MoO_3$ et $WO_3$ respectivement.

Le rapport pondéral exprimé en oxyde métallique entre le métal (ou les métaux) du groupe VIB par rapport au métal (ou aux métaux) du groupe VIII est de préférence compris entre 1 et 20, et de manière préférée entre 2 et 10.

Selon cette variante, la section réactionnelle de ladite étape a) comprend par exemple un catalyseur d'hydrogénation comprenant entre 0,5% et 12% en poids de nickel, de préférence entre 1% et 10% en poids de nickel (exprimé en oxyde de nickel NiO par rapport au poids dudit catalyseur), et entre 1% et 30% en poids de molybdène, de préférence entre 3% et 20% en poids de molybdène (exprimé en oxyde de molybdène $MoO_3$ par rapport au poids dudit catalyseur) sur un support de préférence minéral, de préférence sur un support d'alumine.

Selon une autre variante, la fonction hydro-déshydrogénante comprend, et est de préférence constituée d'au moins un élément du groupe VIII, de préférence du nickel. Selon cette variante, la teneur en nickel, exprimée en NiO, est de préférence comprise entre 1 et 50 % en poids, de préférence entre 10% et 30% en poids par rapport au poids dudit catalyseur. Ce type de catalyseur est de préférence utilisé sous sa forme réduite, sur un support de préférence minéral, de préférence sur un support d'alumine.

Le support dudit au moins catalyseur d'hydrogénation sélective est de préférence choisi parmi l'alumine, la silice, les silices-alumines, la magnésie, les argiles et leurs mélanges. Ledit support peut renfermer des composés dopants, notamment des oxydes choisis parmi l'oxyde de bore, en particulier le trioxyde de bore, la zircone, la cérine, l'oxyde de titane, l'anhydride phosphorique et un mélange de ces oxydes. De préférence, ledit au moins catalyseur d'hydrogénation sélective comprend un support d'alumine, éventuellement dopé avec du phosphore et éventuellement du bore. Lorsque l'anhydride phosphorique $P_2O_5$ est présent, sa concentration est inférieure à 10% en poids par rapport au poids de l'alumine et avantageusement d'au moins 0,001 % poids par rapport au poids total de l'alumine. Lorsque le trioxyde de bore $B_2O_3$ est présent, sa concentration est inférieure à 10% en poids par rapport au poids de l'alumine et avantageusement d'au moins 0,001 % par rapport au poids total de l'alumine. L'alumine utilisée peut être par exemple une alumine $\gamma$ (gamma) ou $\eta$ (êta).

Ledit catalyseur d'hydrogénation sélective est par exemple sous forme d'extrudés.

De manière très préférée, afin d'hydrogéner les dioléfines le plus sélectivement possible, l'étape a) peut mettre en œuvre en plus des catalyseurs d'hydrogénation sélective décrits ci-dessus en outre au moins un catalyseur d'hydrogénation sélective utilisé dans l'étape a) comprenant moins de 1% en poids de nickel et au moins 0,1% poids de nickel, de préférence 0,5% poids de nickel, exprimé en oxyde de nickel NiO par rapport au poids dudit catalyseur, et moins de 5% en poids de molybdène et au moins 0,1 % poids de molybdène, de préférence 0,5% poids de molybdène, exprimé en oxyde de molybdène $MoO_3$ par rapport au poids dudit catalyseur, sur un support d'alumine. Ce catalyseur peu chargé en métaux est de préférence mis en amont des catalyseurs d'hydrogénation sélective décrits ci-dessus.

La teneur en impuretés, en particulier en dioléfines, de l'effluent hydrogéné obtenu à l'issue de l'étape a) est réduite par rapport à celle des mêmes impuretés, en particulier des dioléfines, comprises dans la charge du procédé. L'étape a) d'hydrogénation sélective permet généralement de convertir au moins 30% et de préférence au moins 40% des dioléfines contenues dans la charge initiale. L'effluent hydrogéné, obtenu à l'issue de l'étape a) d'hydrogénation sélective, est envoyé, de préférence directement, vers l'étape b) d'hydrodémétallation.

**Etape b) d'hydrodémétallation**

Selon l'invention, le procédé comprend une étape b) d'hydrodémétallation mise en œuvre dans une section réactionnelle d'hydrodémétallation comprenant au moins un catalyseur d'hydrodémétallation, ladite section réactionnelle d'hydrodémétallation étant alimentée au moins par ladite charge comprenant une huile de pyrolyse de plastiques, éventuellement prétraitée, et/ou l'effluent hydrogéné issu de a), et un flux gazeux comprenant de l'hydrogène, ladite section réactionnelle d'hydrodémétallation étant mise en œuvre à une température moyenne entre 140 et 400°C, une pression partielle d'hydrogène entre 1,0 et 20,0 MPa abs. et une vitesse volumique horaire entre 0,1 et 10,0 h$^{-1}$, pour obtenir un effluent démétallé.

Eventuellement, la section réactionnelle de ladite étape b) peut également être alimentée en outre par au moins une partie de la charge issue de ressources renouvelables, éventuellement prétraitée.

Eventuellement, la section réactionnelle de ladite étape b) peut également être alimentée en outre par au moins une fraction d'un flux de recycle, avantageusement issu de l'étape d) ou de l'étape e) optionnelle du procédé.

En fonction de la composition de la charge, les conditions de l'étape d'hydrodémétallation permettent de réaliser des réactions d'hydrodémétallation, notamment la rétention du silicium, des réactions d'hydrogénation, notamment des dioléfines et des oléfines, des réactions d'hydrotraitement, notamment de conversion du chlore, de l'azote et du soufre, des réactions d'hydrogénloyse et/ou de décarboxylation des fonctions esters.

L'étape b) d'hydrodémétallation peut être mise en œuvre dans une section réactionnelle d'hydrodémétallation comprenant au moins un catalyseur d'hydrodémétallation mettant en œuvre au moins un réacteur à lit bouillonnant, à lit entraîné, à lit mobile et/ou à lit fixe.

Selon un mode préféré, l'étape b) est mise en œuvre en lit fixe. L'étape b) mise en œuvre en lit fixe est notamment effectuée dans des conditions de pression en hydrogène et de température permettant d'effectuer l'hydrogénation au moins en partie des dioléfines et des oléfines, notamment en l'absence de l'étape optionnelle a) d'hydrogénation sélective, en début de la section réactionnelle d'hydrodémétallation tout en permettant un profil montant de la température de manière à ce que la température en sortie de la section réactionnelle de l'étape b) soit de préférence au moins supérieure de 15°C à la température en entrée de la section réactionnelle de l'étape b). En effet, une quantité d'hydrogène nécessaire est injectée de manière à permettre l'hydrogénation d'au moins une partie des dioléfines et des oléfines présentes dans la charge, l'hydrodémétallation d'au moins une partie des métaux et/ou des métalloïdes, notamment la rétention du silicium, et aussi la conversion d'au moins une partie du chlore (en HCl selon un mécanisme d'hydrodéchloration). L'hydrogénation des dioléfines et des oléfines permet ainsi d'éviter ou au moins de limiter la formation de « gommes », c'est-à-dire la polymérisation des dioléfines et des oléfines et donc la formation d'oligomères et polymères, pouvant boucher la section réactionnelle de l'étape c) d'hydrotraitement. En parallèle de l'hydrogénation, l'hydrodémétallation, et notamment la rétention du silicium lors de l'étape b), permet de limiter la désactivation catalytique de la section réactionnelle de l'étape c) d'hydrotraitement. De plus, les conditions de l'étape b), notamment la température et son profil montant, permettent de convertir au moins une partie du chlore, de réaliser une partie de l'hydrotraitement et donc l'élimination d'une partie de l'azote et du soufre, de réaliser une partie de la conversion des triglycérides et/ou acides gras libres en molécules hydrocarbonées via des mécanismes de décarboxylation et/ou d'hydrogénolyse des fonctions esters.

Lors que l'étape b) est mise en œuvre en lit fixe, le contrôle de la température est ainsi important dans cette étape et doit répondre à une contrainte antagoniste. D'un côté la température en entrée et dans toute la section réactionnelle d'hydrodémétallation doit être suffisamment basse afin de permettre l'hydrogénation des dioléfines et des oléfines en début de la section réactionnelle d'hydrodémétallation, notamment en l'absence de l'étape a) optionnelle. D'un autre côté, la température en entrée de la section réactionnelle d'hydrodémétallation doit être suffisamment élevée afin d'éviter la désactivation du catalyseur induite par des dépôts d'impuretés favorisés à basse température. Les réactions d'hydrogénation, notamment d'une partie des oléfines et des dioléfines, ainsi que les réactions de décarboxylation et/ou d'hydrogénolyse des fonctions esters, étant fortement exothermiques, on observe alors un profil montant de la température dans la section réactionnelle d'hydrodémétallation. Cette température plus élevée en fin de ladite section permet d'effectuer les réaction d'hydrodémétallation et d'hydrodéchloration. Ainsi, la température en sortie de la section réactionnelle de l'étape b) est de préférence au moins supérieure de 15°C, de préférence au moins supérieure à 25°C et de manière particulièrement préférée au moins supérieure à 30°C à la température en entrée de la section réactionnelle de l'étape b).

La différence de température entre l'entrée et la sortie de la section réactionnelle de l'étape b) s'entend avec injection éventuelle d'un quelconque flux de refroidissement gazeux (hydrogène) ou liquide (par exemple le recycle d'un flux provenant des étapes d) et/ou e).

La différence de température entre l'entrée et la sortie de la section réactionnelle de l'étape b) est exclusivement due à l'exothermicité des réactions chimiques réalisées dans la section réactionnelle et s'entend donc hors utilisation d'un moyen de chauffe (four, échangeur de chaleur etc).

La température en entrée de la section réactionnelle de l'étape b) est comprise entre 135 et 385°C, de préférence entre 210 et 335°C.

La température en sortie de la section réactionnelle de l'étape b) est comprise entre 150 et 400°C, de préférence entre 225 et 350°C.

Selon l'invention, il est avantageux de réaliser au moins en partie l'hydrogénation des dioléfines et des oléfines, les réactions d'hydrodémétallation, notamment la rétention du silicium, et une partie des réactions d'hydrotraitement dans une même étape et à une température suffisante pour limiter la désactivation du catalyseur de l'étape c). Cette même étape permet aussi de bénéficier des chaleurs de réactions de manière à avoir un profil de température montant dans cette étape et pouvant ainsi éliminer la nécessité d'un dispositif de chauffe entre la section catalytique d'hydrodémétallation et la section catalytique d'hydrotraitement.

Ladite section réactionnelle met en œuvre une hydrodémétallation en présence d'au moins un catalyseur d'hydrodémétallation, avantageusement à une température (moyenne ou WABT telle que définie ci-dessus dans l'étape a)) entre 140 et 400°C, de préférence entre 220 et 350°C, et de manière particulièrement préférée entre 260 et 330°C, une pression partielle d'hydrogène entre 1,0 et 20,0 MPa abs, de manière préférée entre 1,5 et 15,0 MPa abs et à une vitesse volumique horaire (VVH) entre 0,1 et 10,0 h$^{-1}$, de manière préférée entre 0,2 et 5,0 h$^{-1}$, et de manière très préférée entre 0,3 et 3,0 h$^{-1}$.

La quantité du flux gazeux comprenant de l'hydrogène (H$_2$), alimentant ladite section réactionnelle de l'étape b), est avantageusement telle que la couverture en hydrogène est comprise entre 50 et 1000 Nm$^3$ d'hydrogène par m$^3$ de charge (Nm$^3$/m$^3$), de préférence entre 50 et 500 Nm$^3$ d'hydrogène par m$^3$ de charge (Nm$^3$/m$^3$), de manière préférée entre 200 et 300 Nm$^3$ d'hydrogène par m$^3$ de charge (Nm$^3$/m$^3$). En effet, la quantité d'hydrogène nécessaire permettant l'hydrogénation d'au moins une partie des dioléfines et des oléfines et l'hydrodémétallation d'au moins une partie des métaux, notamment la rétention du silicium, et aussi la conversion d'au moins une partie du chlore (en HCl) et éventuellement la conversion d'au moins une partie des esters d'origine renouvelable, est supérieure à la quantité d'hydrogène nécessaire permettant d'effectuer que l'hydrogénation des dioléfines tel que décrit dans FR20/01.758.

La vitesse volumique horaire (VVH) et la couverture en hydrogène sont définies telle que décrites dans l'étape a) avec comme « charge entrant dans la section réactionnelle la totalité de la charge « fraîche » éventuellement prétraitée (étape a0)) et éventuellement hydrogénée sélectivement (étape a)), c'est-à-dire comprenant au moins l'huile de pyrolyse et éventuellement une partie ou la totalité de la charge issue de ressources renouvelables, éventuellement complétée avec un flux de recycle issu des étapes d) et/ou e).

Avantageusement, la section réactionnelle de ladite étape b) comprend entre 1 et 5 réacteurs, de préférence entre 2 et 5 réacteurs, et manière particulièrement préférée elle comprend deux réacteurs.

Le ou les réacteur(s) de la section réactionnelle de l'étape b) peuvent être de type réacteur à lit fixe, à lit bouillonnant, à lit entraîné et/ou à lit mobile.

Selon une variante, la section réactionnelle comprend un réacteur en lit bouillonnant ou un lit mobile permettant des appoints et des soutirages de catalyseurs afin de compenser la désactivation.

Selon une autre variante, préférée, la section réactionnelle comprend un réacteur en lit fixe et de préférence deux réacteurs en lit fixe, ayant n lits catalytiques, n étant un nombre entier supérieur ou égal à 1, comprenant chacun au moins un catalyseur d'hydrodémétallation.

Selon un mode de réalisation particulier, tout ou partie de la charge peut être injectée de manière étagée en entrée de chaque lit catalytique de manière à gérer les exothermes tel que décrit dans FR2969642. Dans ce cas, le flux de la charge totale est divisé en un certain nombre de différents flux partiels égal au nombre de lits catalytiques dans le réacteur, les différents flux partiels sont injectés en entrée des lits catalytiques successives dans des proportions croissantes.

Selon une variante, les réacteurs en lit fixe fonctionnent en mode permutable, appelé selon le terme anglais « PRS » pour Permutable Reactor System ou encore « lead and lag ». L'association d'au moins deux réacteurs en mode PRS permet d'isoler un réacteur, de décharger le catalyseur usé, de recharger le réacteur en catalyseur frais et remettre en service ledit réacteur sans arrêt du procédé. La technologie PRS est décrite, en particulier, dans le brevet FR2681871. L'avantage d'une section réactionnelle d'hydrodémétallation comprenant plusieurs réacteurs en mode permutable réside dans un traitement optimisé de la charge, tout en permettant de diminuer les risques de colmatage et/ou de désactivation du ou des lits catalytiques et donc d'éviter l'arrêt de l'unité dû au colmatage et/ou à la désactivation.

Selon une variante particulièrement préférée, la section réactionnelle d'hydrodémétallation de l'étape b) comprend deux réacteurs fonctionnent en mode permutable.

Avantageusement, des internes de réacteurs, par exemple de type plateaux filtrants, peuvent être utilisés pour prévenir le bouchage du(des) réacteur(s). Un exemple de plateau filtrant est décrit dans le brevet FR3051375.

Avantageusement, ledit catalyseur d'hydrodémétallation comprend un support, de préférence minéral, et une fonction hydro-déshydrogénante.

Selon une variante, la fonction hydro-déshydrogénante comprend en particulier au moins un élément du groupe VIII, de préférence choisi parmi le nickel et le cobalt, et au moins un élément du groupe VIB, de préférence choisi parmi le molybdène et le tungstène. Selon cette variante, la teneur totale exprimée en oxydes des éléments métalliques des groupes VIB et VIII est de préférence comprise entre 1% et 40% en poids, préférentiellement de 5% à 30% en poids par rapport au poids total du catalyseur. Lorsque le métal est le cobalt ou le nickel, la teneur en métal s'exprime en CoO et NiO respectivement. Lorsque le métal est le molybdène ou le tungstène, la teneur en métal s'exprime en MoO$_3$ et WO$_3$ respectivement.

Le rapport pondéral exprimé en oxyde métallique entre le métal (ou les métaux) du groupe VIB par rapport au métal (ou aux métaux) du groupe VIII est de préférence compris entre 1 et 20, et de manière préférée entre 2 et 10.

Selon cette variante, la section réactionnelle de ladite étape b) comprend par exemple un catalyseur d'hydrodémétallation comprenant entre 0,5% et 12% en poids de nickel, de préférence entre 1% et 10% en poids de nickel (exprimé en oxyde de nickel NiO par rapport au poids dudit catalyseur), et entre 1% et 30% en poids de molybdène, de préférence entre 3% et 20% en poids de molybdène (exprimé en oxyde de molybdène $MoO_3$ par rapport au poids dudit catalyseur) sur un support de préférence minéral, de préférence sur un support d'alumine.

Selon une autre variante, la fonction hydro-déshydrogénante comprend, et est de préférence constituée d'au moins un élément du groupe VIII, de préférence du nickel. Selon cette variante, la teneur en oxydes de nickel est de préférence comprise entre 1 et 50 % en poids, de préférence entre 10% et 30% en poids par rapport au poids dudit catalyseur. Ce type de catalyseur est de préférence utilisé sous sa forme réduite, sur un support de préférence minéral, de préférence sur un support d'alumine.

Le support dudit catalyseur d'hydrodémétallation est de préférence choisi parmi l'alumine, la silice, les silices-alumines, la magnésie, les argiles et leurs mélanges. Ledit support peut renfermer des composés dopants, notamment des oxydes choisis parmi l'oxyde de bore, en particulier le trioxyde de bore, la zircone, la cérine, l'oxyde de titane, l'anhydride phosphorique et un mélange de ces oxydes. De préférence, ledit catalyseur d'hydrodémétallation comprend un support d'alumine, éventuellement dopé avec du phosphore et éventuellement du bore. Lorsque l'anhydride phosphorique $P_2O_5$ est présent, sa concentration est inférieure à 10% en poids par rapport au poids de l'alumine et avantageusement d'au moins 0,001 % poids par rapport au poids total de l'alumine. Lorsque le trioxyde de bore $B_2O_3$ est présent, sa concentration est inférieure à 10% en poids par rapport au poids de l'alumine et avantageusement d'au moins 0,001 % par rapport au poids total de l'alumine. L'alumine utilisée peut être par exemple une alumine $\gamma$ (gamma) ou $\eta$ (êta).

Ledit catalyseur d'hydrodémétallation est par exemple sous forme d'extrudés.

De manière très préférée, l'étape b) peut mettre en œuvre en plus du ou des catalyseurs d'hydrodémétallation décrits ci-dessus en outre au moins un catalyseur d'hydrodémétallation utilisé dans l'étape b) comprenant moins de 1% en poids de nickel et au moins 0,1 % poids de nickel, de préférence 0,5% poids de nickel, exprimé en oxyde de nickel NiO par rapport au poids dudit catalyseur, et moins de 5% en poids de molybdène et au moins 0,1 % poids de molybdène, de préférence 0,5% poids de molybdène, exprimé en oxyde de molybdène $MoO_3$ par rapport au poids dudit catalyseur, sur un support d'alumine. Ce catalyseur peu chargé en métaux peut être mis de préférence en amont ou en aval, de préférence en aval, du ou des catalyseurs d'hydrodémétallation décrits ci-dessus.

Avantageusement, ledit catalyseur utilisé dans ladite étape b) peut être choisi parmi des catalyseurs connus d'hydrodémétallation, d'hydrotraitement, de captation du silicium, utilisés notamment pour le traitement des coupes pétrolières, et leurs combinaisons. Des catalyseurs d'hydrodémétallation connus sont par exemple ceux décrits dans les brevets EP 0113297, EP 0113284, US 5221656, US 5827421, US 7119045, US 5622616 et US 5089463. Des catalyseurs de captation du silicium connus sont par exemple ceux décrits dans les demandes de brevets CN 102051202 et US 2007/080099.

Ladite étape b) d'hydrodémétallation permet d'obtenir un effluent démétallé, c'est-à-dire à teneur réduite en silicium et éventuellement à teneur réduite en oléfines, en particulier en dioléfines, en métaux et en chlore. De préférence, au moins 50%, et plus préférentiellement au moins 75% du chlore et du silicium de la charge initiale sont éliminés lors de l'étape b). L'effluent démétallé obtenu à l'issue de l'étape b) d'hydrodémétallation est envoyé, de préférence directement, vers l'étape c) d'hydrotraitement.

**Etape c) d'hydrotraitement**

Selon l'invention, le procédé de traitement comprend une étape c) d'hydrotraitement mise en œuvre dans une section réactionnelle d'hydrotraitement comprenant au moins un catalyseur d'hydrotraitement, ladite section réactionnelle d'hydrotraitement étant alimentée au moins par ledit effluent démétallé issu de l'étape b), et un flux gazeux comprenant de l'hydrogène, ladite section réactionnelle d'hydrotraitement étant mise en œuvre à une température entre 250 et 450°C, une pression partielle d'hydrogène entre 1,0 et 20,0 MPa abs. et une vitesse volumique horaire entre 0,1 et 10,0 h$^{-1}$, pour obtenir un effluent d'hydrotraité.

Eventuellement, la section réactionnelle de ladite étape c) peut également être alimentée en outre par au moins une partie de la charge issue de ressources renouvelables, éventuellement prétraitée.

Selon une variante, au moins une partie, et de préférence la totalité de la charge issue de ressources renouvelables est introduite dans l'étape c).

Eventuellement, la section réactionnelle de ladite étape c) peut également être alimentée en outre par au moins une fraction d'un flux de recycle, avantageusement issu de l'étape d) ou de l'étape e) optionnelle du procédé.

Avantageusement, l'étape c) met en œuvre les réactions d'hydrotraitement bien connues de l'homme du métier, et plus particulièrement des réactions d'hydrotraitement telles que l'hydrogénation des aromatiques, l'hydrodésulfuration et l'hydrodéazotation. De plus, l'hydrogénation des oléfines et des composés halogénés restants ainsi que l'hydrodémétallation sont poursuivies. L'étape c) met également en œuvre des réactions d'hydrogénolyse et/ou de décarboxylation des fonctions esters issues des triglycérides et/ou des acides gras libres de sources renouvelables.

Ladite section réactionnelle d'hydrotraitement est avantageusement mise en œuvre à une pression équivalente à celle utilisée dans la section réactionnelle de l'étape b) d'hydrodémétallation, mais à une température plus élevée que celle de la section réactionnelle de l'étape b) d'hydrodémétallation. Ainsi, ladite section réactionnelle d'hydrotraitement est avantageusement mise en œuvre à une température (moyenne) d'hydrotraitement entre 250 et 450°C, de préférence entre 280 et 380°C, à une pression partielle d'hydrogène entre 1,0 et 20,0 MPa abs. et à une vitesse volumique horaire (VVH) entre 0,1 et 10,0 h$^{-1}$, de préférence entre 0,1 et 5,0 h$^{-1}$, préférentiellement entre 0,2 et 2,0 h$^{-1}$, de manière préférée entre 0,2 et 1 h$^{-1}$. La couverture en hydrogène dans l'étape c) est avantageusement comprise entre 50 et 1000 Nm$^3$ d'hydrogène par m$^3$ de charge qui alimente l'étape c), et de préférence entre 50 et 500 Nm$^3$ d'hydrogène par m$^3$ de charge qui alimente l'étape c), de manière préférée entre 100 et 300 Nm$^3$ d'hydrogène par m$^3$ de charge qui alimente l'étape c). Les définitions de la température (WABT), de la VVH et de la couverture en hydrogène correspondent à celles décrites ci-dessus avec comme « charge entrant dans la section réactionnelle de l'étape c)» l'effluent démétallé issu de l'étape b) et éventuellement une partie ou la totalité de la charge issue de ressources renouvelables, éventuellement complétée avec un flux de recycle issu des étapes d) et/ou e).

La température (moyenne) de la section réactionnelle de l'étape c) est de préférence supérieure à la température (moyenne) de la section réactionnelle d'hydrodémétallation de l'étape b), de préférence au moins 10°C, de manière préférée au moins 15°C.

Le flux gazeux comprenant de l'hydrogène, qui alimente la section réactionnelle de l'étape c), peut être constitué d'un appoint en hydrogène et/ou d'hydrogène recyclé avantageusement issu de l'étape d) ou de l'étape e) optionnelle.

Avantageusement, la section réactionnelle de ladite étape c) comprend entre 1 et 5 réacteurs, de préférence entre 2 et 5 réacteurs, et manière particulièrement préférée elle comprend deux réacteurs.

Le ou les réacteur(s) de la section réactionnelle de l'étape c) peuvent être de type réacteur à lit fixe, à lit bouillonnant, à lit entraîné et/ou à lit mobile.

Selon une variante, la section réactionnelle comprend un réacteur en lit bouillonnant ou un lit mobile permettant des appoints et des soutirages de catalyseurs afin de compenser la désactivation.

Avantageusement, ladite étape c) est mise en œuvre dans une section réactionnelle d'hydrotraitement comprenant au moins un, de préférence entre 1 et 5, réacteur(s) à lit fixe ayant n lits catalytiques, n étant un nombre entier supérieur ou égal à un, de préférence compris entre 1 et 10, de manière préférée compris entre 2 et 5, le(s)dit(s) lit(s) comprenant chacun au moins un, et de préférence pas plus de 10, catalyseur(s) d'hydrotraitement. Lorsqu'un réacteur comprend plusieurs lits catalytiques, c'est-à-dire au moins deux, de préférence entre deux et dix, de manière préférée entre deux et cinq lits catalytiques, lesdits lits catalytiques sont de préférence disposés en série dans ledit réacteur.

Dans un mode de réalisation préférée de l'invention, ladite section réactionnelle d'hydrotraitement comprend un seul réacteur à lit fixe contenant n lits catalytiques, n étant un nombre entier supérieur ou égal à un, de préférence compris entre un et dix, de manière préférée compris entre deux et cinq.

Selon un mode de réalisation, tout ou partie de la charge peut être injectée de manière étagée en entrée de chaque lit catalytique de manière à gérer les exothermes tel que décrit ci-dessus. Selon une variante, notamment lorsque la charge issue de ressources renouvelables est injectée à l'étape c), la charge issue de l'étape b) (huile de pyrolyse) est introduite en tête de ladite section réactionnelle d'hydrotraitement c), alors que la charge issue de ressources renouvelables est injectée de manière étagée en entrée de chaque lit catalytique dans des proportions croissantes. Ceci permet de mieux gérer les exothermes.

Lorsque l'étape c) est mise en œuvre dans une section réactionnelle d'hydrotraitement comprenant plusieurs, de préférence deux réacteurs, ces réacteurs peuvent fonctionner en série et/ou en parallèle et/ou en mode permutable (ou PRS) et/ou en mode « swing ». Les différents modes de fonctionnement éventuels, mode PRS (ou lead and lae) et mode swing, et sont bien connus de l'Homme du métier et sont avantageusement définis plus haut.

Ledit catalyseur d'hydrotraitement comprend un support, de préférence minéral, et au moins un élément métallique ayant une fonction hydro-déshydrogénante. Ledit élément métallique ayant une fonction hydro-déshydrogénante comprend avantageusement au moins un élément du groupe VIII, de préférence choisi dans le groupe constitué par le nickel et le cobalt, et/ou au moins un élément du groupe VIB, de préférence choisi dans le groupe constitué par le molybdène et le tungstène. La teneur totale en oxydes des éléments métalliques des groupes VIB et VIII est de préférence entre 0,1% et 40% en poids, préférentiellement de 5% à 35% en poids, par rapport au poids total du catalyseur. Lorsque le métal est le cobalt ou le nickel, la teneur en métal s'exprime en CoO et NiO respectivement. Lorsque le métal est le molybdène ou le tungstène, la teneur en métal s'exprime en MoO$_3$ et WO$_3$ respectivement. Le rapport pondéral exprimé en oxyde métallique entre le métal (ou les métaux) du groupe VIB par rapport au métal (ou aux métaux) du groupe VIII est de préférence compris entre 1,0 et 20, de manière préférée entre 2,0 et 10. Par exemple, la section réactionnelle d'hydrotraitement de l'étape b) du procédé comprend un catalyseur d'hydrotraitement comprenant entre 0,5% et 10% en poids de nickel, de préférence entre 1% et 8% en poids de nickel, exprimé en oxyde de nickel NiO par rapport au poids total du catalyseur d'hydrotraitement, et entre 1,0% et 30% en poids de molybdène, de préférence entre 3,0% et 29% en poids de molybdène, exprimé en oxyde de molybdène MoO$_3$ par rapport au poids total du catalyseur d'hydrotraitement, sur un support minéral, de préférence sur un support d'alumine.

Le support dudit catalyseur d'hydrotraitement est avantageusement choisi parmi l'alumine, la silice, les silices-alumines, la magnésie, les argiles et leurs mélanges. Ledit support peut en outre renfermer des composés dopants, notamment des oxydes choisis parmi l'oxyde de bore, en particulier le trioxyde de bore, la zircone, la cérine, l'oxyde de titane, l'anhydride phosphorique et un mélange de ces oxydes. De préférence, ledit catalyseur d'hydrotraitement comprend un support d'alumine, de manière préférée un support d'alumine dopé avec du phosphore et éventuellement du bore. Lorsque l'anhydride phosphorique $P_2O_5$ est présent, sa concentration est inférieure à 10% en poids par rapport au poids de l'alumine et avantageusement d'au moins 0,001 % poids par rapport au poids total de l'alumine. Lorsque le trioxyde de bore $B_2O_5$ est présent, sa concentration est inférieure à 10% en poids par rapport au poids de l'alumine et avantageusement d'au moins 0,001 % par rapport au poids total de l'alumine. L'alumine utilisée peut être par exemple une alumine $\gamma$ (gamma) ou $\eta$ (êta).

Ledit catalyseur d'hydrotraitement est par exemple sous forme d'extrudés.

Des catalyseurs d'hydrotraitement connus sont par exemple ceux décrits dans les brevets EP0113297, EP0113284, US6589908, US4818743 ou US6332976.

Avantageusement, ledit catalyseur d'hydrotraitement utilisé dans l'étape c) du procédé présente une surface spécifique supérieure ou égale à 250 m$^2$/g, de préférence supérieure ou égale à 300 m$^2$/g. La surface spécifique dudit catalyseur d'hydrotraitement est avantageusement inférieure ou égale à 800 m$^2$/g, de préférence inférieure ou égale à 600 m$^2$/g, en particulier inférieure ou égale à 400 m$^2$/g. La surface spécifique du catalyseur d'hydrotraitement est mesurée par la méthode BET, c'est-à-dire la surface spécifique déterminée par adsorption d'azote conformément à la norme ASTM D 3663-78 établie à partir de la méthode BRUNAUER-EMMETT-TELLER décrite dans le périodique 'The Journal of the American Chemical Society", 6Q, 309 (1938). Une telle surface spécifique permet d'améliorer encore l'élimination des contaminants, en particulier des métaux comme le silicium.

Selon un autre aspect de l'invention, le catalyseur d'hydrotraitement tel que décrit plus haut comprend en outre un ou plusieurs composés organiques contenant de l'oxygène et/ou de l'azote et/ou du soufre. Un tel catalyseur est souvent désigné par le terme "catalyseur additivé". Généralement, le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée et amide ou encore les composés incluant un cycle furanique ou encore les sucres.

La charge d'origine renouvelable ne contenant pas ou peu de soufre, en fonction de la teneur en soufre de la charge issue de la pyrolyse de plastiques, il peut être avantageux d'injecter un composé soufré, par exemple du DMDS, afin de maintenir la phase active des catalyseurs sous forme sulfure. L'ajout d'un composé soufré peut également être effectué pour les catalyseurs des autres étapes (étapes a), b) et/ou c').

Avantageusement, l'étape c) d'hydrotraitement permet l'hydrotraitement d'au moins 80% de l'azote restant après l'étape b) d'hydrodémétallation, mais aussi la conversion d'au moins 80% des triglycérides. L'étape c) permet également l'élimination en partie d'autres impuretés présentes dans la charge, comme les composés aromatiques, les composés métalliques, les composés soufrés, les composés azotés, les composés halogénés (notamment les composés chlorés), les composés oxygénés. De préférence, la teneur en azote en sortie de l'étape c) est inférieure à 10 ppm poids. L'étape c) peut également permettre de réduire encore davantage la teneur en contaminants, comme celle des métaux, en particulier la teneur en silicium. De préférence, la teneur en métaux en sortie de l'étape c) est inférieure à 10 ppm poids et la teneur en silicium est inférieure à 5 ppm poids.

**Etape (optionnelle) c') d'hydrocraquage**

Selon une variante, le procédé de l'invention peut comprendre une étape c') d'hydrocraquage effectuée soit directement après l'étape c) d'hydrotraitement, soit après l'étape e) de fractionnement sur une coupe hydrocarbonée comprenant des composés ayant un point d'ébullition supérieur à 175°C.

Avantageusement, l'étape c') met en œuvre les réactions d'hydrocraquage bien connues de l'homme du métier, et permet plus particulièrement de convertir les composés lourds, par exemple des composés ayant un point d'ébullition supérieur à 175°C en composés ayant un point d'ébullition inférieur ou égal à 175°C contenus dans l'effluent hydrotraité issu de l'étape c) ou séparés lors de l'étape e) de fractionnement optionnelle. D'autres réactions, comme l'hydrogénation des oléfines, des aromatiques, l'hydrodémétallation, l'hydrodésulfuration, l'hydrodéazotation, etc. peuvent se poursuivent.

Les composés ayant un point d'ébullition supérieur à 175°C ont un BMCI élevé et contiennent par rapport à des composés plus légers, plus de composés naphténiques, naphténo-aromatiques et aromatiques menant ainsi à un ratio C/H plus élevé. Ce ratio élevé est une cause de cokage dans le vapocraqueur, nécessitant ainsi des fours de vapocraquage dédiés à cette coupe. Lorsqu'on souhaite minimiser le rendement de ces composés lourds (coupe diesel) et maximiser le rendement de composés légers (coupe naphta), on peut transformer ces composés au moins en partie en composés légers par hydrocraquage, coupe généralement favorisée pour une unité de vapocraquage.

Ainsi, le procédé de l'invention peut comprendre une étape c') d'hydrocraquage mise en œuvre dans une section réactionnelle d'hydrocraquage comprenant au moins un catalyseur d'hydrocraquage, ladite section réactionnelle d'hydrocraquage étant alimentée par ledit effluent hydrotraité issu de l'étape c) et/ou par la coupe comprenant des composés ayant un point d'ébullition supérieur à 175°C issue de l'étape e) et un flux gazeux comprenant de l'hydrogène, ladite section réactionnelle d'hydrocraquage étant mise en œuvre à une température (moyenne) entre 250 et 450°C, une pression partielle d'hydrogène entre 1,5 et 20,0 MPa abs. et une vitesse volumique horaire entre 0,1 et 10,0 h$^{-1}$, pour obtenir un effluent hydrocraqué qui est envoyé dans l'étape d) de séparation.

Ainsi, ladite section réactionnelle d'hydrocraquage est avantageusement mise en œuvre à une température d'hydrocraquage entre 250 et 450°C, de préférence entre 320 et 440°C, à une pression partielle d'hydrogène entre 1,5 et 20,0 MPa abs., de préférence entre 2 et 18,0 MPa abs, et à une vitesse volumique horaire (VVH) entre 0,1 et 10,0 h$^{-1}$, de préférence entre 0,1 et 5,0 h$^{-1}$, préférentiellement entre 0,2 et 4 h$^{-1}$. La couverture en hydrogène dans l'étape c') est avantageusement comprise entre 80 et 2000 Nm$^3$ d'hydrogène par m$^3$ de charge qui alimente l'étape c'), et de préférence entre 200 et 1800 Nm$^3$ d'hydrogène par m$^3$ de charge qui alimente l'étape c'). Les définitions de la température (WABT), de la VVH et de la couverture en hydrogène correspondent à celles décrites ci-dessus avec comme « charge entrant dans la section réactionnelle de l'étape c') » l'effluent hydrotraité issu de l'étape c) et/ou la coupe hydrocarbonée comprenant des composés ayant un point d'ébullition supérieur à 175°C issue de l'étape e).

Avantageusement, ladite section réactionnelle d'hydrocraquage est mise en œuvre à une pression équivalente à celle utilisée dans la section réactionnelle de l'étape b) d'hydrodémétallation ou l'étape c) d'hydrotraitement. Selon une autre variante, ladite section réactionnelle d'hydrocraquage est mise en œuvre à une pression supérieure à celle utilisée dans la section réactionnelle de l'étape b) d'hydrodémétallation ou l'étape c) d'hydrotraitement.

Le ou les réacteur(s) de la section réactionnelle de l'étape c') peuvent être de type réacteur à lit fixe, à lit bouillonnant, à lit entraîné et/ou à lit mobile, de préférence en lit fixe.

Avantageusement, ladite étape c') est mise en œuvre dans une section réactionnelle d'hydrocraquage comprenant au moins un, de préférence entre un et cinq, réacteur(s) à lit fixe ayant n lits catalytiques, n étant un nombre entier supérieur ou égal à un, de préférence compris entre un et dix, de manière préférée compris entre deux et cinq, le(s) dit(s) lit(s) comprenant chacun au moins un, et de préférence pas plus de dix, catalyseur(s) d'hydrocraquage. Lorsqu'un réacteur comprend plusieurs lits catalytiques, c'est-à-dire au moins deux, de préférence entre deux et dix, de manière préférée entre deux et cinq lits catalytiques, lesdits lits catalytiques sont de préférence disposés en série dans ledit réacteur.

L'étape c) d'hydrotraitement et l'étape c') d'hydrocraquage peuvent avantageusement être réalisées dans un même réacteur ou dans des réacteurs différents. Dans le cas où elles sont réalisées dans un même réacteur, le réacteur comprend plusieurs lits catalytiques, les premiers lits catalytiques comprenant le ou les catalyseurs d'hydrotraitement et les lits catalytiques suivants comprenant le ou les catalyseurs d'hydrocraquage.

L'étape d'hydrocraquage peut être effectuée en une (étape c') ou deux étapes (étape c') et c")). Lorsqu'elle est effectuée en deux étapes, on effectue un fractionnement de l'effluent issue de la première étape d'hydrocraquage c') permettant d'obtenir une coupe comprenant des composés ayant un point d'ébullition supérieur à 175°C (coupe diesel) lors des étapes d) et e), laquelle est introduite dans la deuxième étape c") d'hydrocraquage comprenant une deuxième section réactionnelle d'hydrocraquage dédiée, différente à la première section réactionnelle d'hydrocraquage c'). Cette configuration est particulièrement adaptée lorsqu'on souhaite maximiser la coupe naphta.

La deuxième étape d'hydrocraquage c") mise en œuvre dans une section réactionnelle d'hydrocraquage, mettant en œuvre au moins un lit fixe ayant n lits catalytiques, n étant un nombre entier supérieur ou égal à 1, comprenant chacun au moins un catalyseur d'hydrocraquage, ladite section réactionnelle d'hydrocraquage étant alimentée par la coupe comprenant des composés ayant un point d'ébullition supérieur à 175°C issue de l'étape e) et un flux gazeux comprenant de l'hydrogène, ladite section réactionnelle d'hydrocraquage étant mise en œuvre à une température moyenne entre 250 et 450°C, une pression partielle d'hydrogène entre 1,5 et 20,0 MPa abs. et une vitesse volumique horaire entre 0,1 et 10,0 h$^{-1}$, pour obtenir un effluent hydrocraqué qui est envoyé dans l'étape d) de séparation. Les conditions opératoires préférées et catalyseurs utilisés dans la deuxième étape d'hydrocraquage sont celles décrites pour la première étape d'hydrocraquage. Les conditions opératoires et catalyseurs utilisés dans les deux étapes d'hydrocraquage peuvent être identiques ou différentes.

La dite deuxième étape d'hydrocraquage est de préférence mise en œuvre dans une section réactionnelle d'hydrocraquage comprenant au moins un, de préférence entre un et cinq, réacteur(s) à lit fixe ayant n lits catalytiques, n étant un nombre entier supérieur ou égal à un, de préférence compris entre un et dix, de manière préférée compris entre deux et cinq, le(s)dit(s) lit(s) comprenant chacun au moins un, et de préférence pas plus de dix, catalyseur(s) d'hydrocraquage.

Ces conditions opératoires utilisées dans la ou les étape(s) d'hydrocraquage permettent généralement d'atteindre des conversions par passe, en produits ayant au moins 80% en volume de composés ayant des points d'ébullition inférieurs ou égale à 175°C, de préférence inférieurs à 160°C et de manière préférée inférieurs à 150°C, et supérieures à 15% poids et de manière encore plus préférée comprises entre 20 et 95% poids. Lorsque le procédé est effectué en deux étapes d'hydrocraquage, la conversion par passe dans la deuxième étape est maintenue modérée afin de maximiser la sélectivité en composés de la coupe naphta (ayant un point d'ébullition inférieur ou égal à 175°C, en particulier entre 80 et inférieur ou égal à 175°C). Le taux de recycle est défini comme le ratio entre le débit de composés ayant un point d'ébullition supérieur à 175°C issus de l'étape e) et le débit de la charge de l'étape c), préférentiellement ce ratio est compris entre 0,2 et 4, de manière préférée entre 0,5 et 2,5.

La ou les étape(s) d'hydrocraquage ne permet(tent) ainsi pas forcément de transformer tous les composés ayant un point d'ébullition supérieur à 175°C (coupe diesel) en composés ayant un point d'ébullition inférieur ou égal à 175°C (coupe naphta). Après l'étape de fractionnement e), il peut rester donc une proportion plus ou moins importante de composés ayant un point d'ébullition supérieur à 175°C. Pour augmenter la conversion, au moins une partie de cette coupe non convertie peut être recyclée comme décrit ci-dessous à l'étape c') ou encore être envoyé dans une deuxième étape d'hydrocraquage c"). Une autre partie peut être purgée. En fonction des conditions opératoires du procédé, ladite purge peut être comprise entre 0 et 10% poids de la coupe comprenant des composés ayant un point d'ébullition supérieur à 175°C par rapport à la charge entrante, et de préférence entre 0,5% et 5% poids.

Conformément à l'invention, la ou les étape(s) d'hydrocraquage opère(nt) en présence d'au moins un catalyseur d'hydrocraquage.

Le ou les catalyseur(s) d'hydrocraquage utilisé(s) dans la ou les étape(s) d'hydrocraquage sont des catalyseurs classiques d'hydrocraquage connus de l'Homme du métier, de type bifonctionnel associant une fonction acide à une fonction hydro-déshydrogénante et éventuellement au moins une matrice liante. La fonction acide est apportée par des supports de grande surface (150 à 800 m$^2$/g généralement) présentant une acidité superficielle, telles que les alumines halogénées (chlorées ou fluorées notamment), les combinaisons d'oxydes de bore et d'aluminium, les silice-alumines amorphes et les zéolithes. La fonction hydro-déshydrogénante est apportée par au moins un métal du groupe VIB de la classification périodique et/ou au moins un métal du groupe VIII.

De préférence, le ou les catalyseurs d'hydrocraquage comprennent une fonction hydro-déshydrogénante comprenant au moins un métal du groupe VIII choisi parmi le fer, le cobalt, le nickel, le ruthénium, le rhodium, le palladium et le platine, et de préférence parmi le cobalt et le nickel. De préférence, le(s)dit(s) catalyseurs comprennent également au moins un métal du groupe VIB choisi parmi le chrome, le molybdène et le tungstène, seul ou en mélange, et de préférence parmi le molybdène et le tungstène. Des fonctions hydro-déshydrogénantes de type NiMo, NiMoW, NiW sont préférées.

De préférence, la teneur en métal du groupe VIII dans le ou les catalyseur(s) d'hydrocraquage est avantageusement comprise entre 0,5 et 15% poids et de préférence entre 1 et 10% poids, les pourcentages étant exprimés en pourcentage poids d'oxydes par rapport au poids total du catalyseur. Lorsque le métal est le cobalt ou le nickel, la teneur en métal s'exprime en CoO et NiO respectivement.

De préférence, la teneur en métal du groupe VIB dans le ou les catalyseur(s) d'hydrocraquage est avantageusement comprise entre 5 et 35% poids, et de préférence entre 10 et 30% poids, les pourcentages étant exprimés en pourcentage poids d'oxydes par rapport au poids total du catalyseur. Lorsque le métal est le molybdène ou le tungstène, la teneur en métal s'exprime en MoO$_3$ et WO$_3$ respectivement.

Le ou les catalyseur(s) d'hydrocraquage peuvent également comprendre éventuellement au moins un élément promoteur déposé sur le catalyseur et choisi dans le groupe formé par le phosphore, le bore et le silicium, éventuellement au moins un élément du groupe VIIA (chlore, fluor préférés), éventuellement au moins un élément du groupe VIIB (manganèse préféré), et éventuellement au moins un élément du groupe VB (niobium préféré).

De préférence, le ou les catalyseur(s) d'hydrocraquage comprennent au moins une matrice minérale poreuse amorphe ou mal cristallisée de type oxyde choisie parmi les alumines, les silices, les silice-alumines, les aluminates, l'alumine-oxyde de bore, la magnésie, la silice-magnésie, le zircone, l'oxyde de titane, l'argile, seuls ou en mélange, et de préférence les alumines ou les silice-alumines, seules ou en mélange.

De préférence, la silice-alumine contient plus de 50% poids d'alumine, de préférence plus de 60% poids d'alumine.

De préférence, le ou les catalyseur(s) d'hydrocraquage comprennent également éventuellement une zéolithe choisie parmi les zéolithes Y, de préférence parmi les zéolithes USY, seules ou en combinaison, avec d'autres zéolithes parmi les zéolithes beta, ZSM-12, IZM-2, ZSM-22, ZSM-23, SAPO-11, ZSM-48, ZBM-30, seules ou en mélange. De manière préférée la zéolithe est la zéolithe USY seule.

Dans le cas où ledit catalyseur comprend une zéolithe, la teneur en zéolithe dans le ou les catalyseur(s) d'hydrocraquage est avantageusement comprise entre 0,1 et 80% poids, de préférence comprise entre 3 et 70% poids, les pourcentages étant exprimés en pourcentage de zéolithe par rapport au poids total du catalyseur.

Un catalyseur préféré comprend, et est de préférence constitué, d'au moins un métal du groupe VIB et éventuellement d'au moins un métal du groupe VIII non noble, d'au moins un élément promoteur, et de préférence le phosphore, d'au moins une zéolithe Y et d'au moins un liant alumine.

Un catalyseur encore plus préféré comprend, et est de préférence constitué, du nickel, du molybdène, du phosphore, d'une zéolithe USY, et éventuellement aussi une zéolithe béta, et de l'alumine.

Un autre catalyseur préféré comprend, et est de préférence constitué, du nickel, du tungstène, de l'alumine et de la silice-alumine.

Un autre catalyseur préféré comprend, et est de préférence constitué, du nickel, du tungstène, d'une zéolithe USY, de l'alumine et de la silice-alumine.

Ledit catalyseur d'hydrocraquage est par exemple sous forme d'extrudés.

Dans une variante, le catalyseur d'hydrocraquage mis en œuvre dans l'étape c") comprend une fonction hydro-déshydrogénante comprenant au moins un métal noble du groupe VIII choisi parmi le palladium et le platine, seul ou en mélange. La teneur en métal noble du groupe VIII est avantageusement comprise entre 0,01 et 5% poids et de préférence entre 0,05 et 3% poids, les pourcentages étant exprimés en pourcentage poids d'oxydes (PtO ou PdO) par rapport au poids total du de catalyseur.

Selon un autre aspect de l'invention, le catalyseur d'hydrocraquage tel que décrit plus haut comprend en outre un ou plusieurs composés organiques contenant de l'oxygène et/ou de l'azote et/ou du soufre. Un tel catalyseur est souvent désigné par le terme "catalyseur additivé". Généralement, le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée et amide ou encore les composés incluant un cycle furanique ou encore les sucres.

La préparation des catalyseurs des étapes a), b), c), c') ou c") est connue et comprend généralement une étape d'imprégnation des métaux du groupe VIII et du groupe VIB lorsqu'il est présent, et éventuellement du phosphore et/ou du bore sur le support, suivie d'un séchage, puis éventuellement d'une calcination. Dans le cas de catalyseur additivé, la préparation se fait généralement par simple séchage sans calcination après introduction du composé organique. On entend ici par calcination un traitement thermique sous un gaz contenant de l'air ou de l'oxygène à une température supérieure ou égale à 200°C. Avant leur utilisation dans une étape du procédé, les catalyseurs sont généralement soumis à une sulfuration afin de former l'espèce active. Le catalyseur de l'étape a) peut aussi être un catalyseur utilisé sous sa forme réduite, impliquant ainsi une étape de réduction dans sa préparation.

Le flux gazeux comprenant de l'hydrogène, qui alimente la section réactionnelle de l'étape a), b), c), c') ou c") peut être constitué d'un appoint en hydrogène et/ou d'hydrogène recyclé avantageusement issu de l'étape d) ou de l'étape e) optionnelle. De préférence, un flux gazeux supplémentaire comprenant de l'hydrogène est avantageusement introduit en entrée de chaque réacteur, en particulier fonctionnant en série, et/ou en entrée de chaque lit catalytique à partir du second lit catalytique de la section réactionnelle. Ces flux gazeux supplémentaires sont appelés encore flux de refroidissement. Ils permettent de contrôler la température dans le réacteur dans lequel les réactions mises en œuvre sont généralement très exothermiques.

Eventuellement, chacune des étapes a), b), c), c') ou c") peut mettre en œuvre une section de chauffe située en amont de la section réactionnelle et dans laquelle l'effluent entrant est chauffé pour atteindre une température adaptée. Ladite éventuelle section de chauffe peut ainsi comprendre un ou plusieurs échangeurs, permettant de préférence un échange de chaleur entre les effluents hydrotraités et/ou hydrocraqués et la charge qui alimente les étapes b), c) et c'), et/ou un four de préchauffe.

Cependant, le fait d'effectuer l'étape b) à une température relativement élevée avec un profil montant permet éventuellement d'éliminer la nécessité d'un dispositif de chauffe ou au moins de réduire le besoin calorique entre la section catalytique d'hydrodémétallation de l'étape b) et la section catalytique d'hydrotraitement de l'étape c).

Etape d) de séparation

Selon l'invention, le procédé de traitement comprend une étape d) de séparation, avantageusement mise en œuvre dans au moins une section de lavage/séparation, alimentée au moins par l'effluent hydrotraité issu de l'étape c), ou l'effluent hydrocraqué issu des étapes c') et c") optionnelles, et une solution aqueuse, pour obtenir au moins un effluent gazeux, un effluent aqueux et un effluent hydrocarboné.

L'effluent gazeux obtenu à l'issu de l'étape d) comprend avantageusement de l'hydrogène, de préférence comprend au moins 80 % volume, de préférence au moins 85 % volume, d'hydrogène. Avantageusement, ledit effluent gazeux peut au moins en partie être recyclé vers les étapes a) d'hydrogénation sélective et/ou b) d'hydrodémétallation et/ou c) d'hydrotraitement et/ou c') d'hydrocraquage et/ou c") d'hydrocraquage.

L'effluent aqueux obtenu à l'issu de l'étape d) comprend avantageusement des sels d'ammonium et/ou de l'acide chlorhydrique.

Cette étape d) de séparation permet en particulier d'éliminer les sels de chlorure d'ammonium, qui se forment par réaction entre les ions chlorure, libérés par l'hydrogénation des composés chlorés sous forme HCl notamment lors de l'étape c) puis dissolution dans l'eau, et les ions ammonium, générés par l'hydrogénation des composés azotés sous forme de $NH_3$ notamment lors de l'étape c) et/ou apportés par injection d'une amine puis dissolution dans l'eau, et ainsi de limiter les risques de bouchage, en particulier dans les lignes de transfert et/ou dans les sections du procédé de l'invention et/ou les lignes de transfert vers le vapocraqueur, dû à la précipitation des sels de chlorure d'ammonium. Il permet aussi d'éliminer l'acide chlorhydrique formé par la réaction des ions hydrogène et des ions chlorures.

En fonction de la teneur en composés chlorés dans la charge initiale à traiter, un flux contenant une amine telle que par exemple la monoéthanolamine, la diéthanolamine et/ou la monodiéthanolamine peut être injectée en amont ou au milieu de l'étape a) d'hydrogénation sélective et/ou l'étape b) d'hydrodémétallation et/ou l'étape c) d'hydrotraitement et/ou l'étape c') d'hydrocraquage et/ou l'étape d) de séparation, de préférence en amont de l'étape c) d'hydrotraitement afin d'assurer une quantité suffisante en ions ammonium pour combiner les ions chlorure formés lors de l'étape c) d'hydrotraitement, permettant ainsi de limiter la formation d'acide chlorhydrique et ainsi de limiter la corrosion en aval de la section de séparation.

Avantageusement, l'étape d) de séparation comprend une injection d'une solution aqueuse, de préférence une injection d'eau, dans l'effluent hydrotraité issu de l'étape c), ou l'effluent hydrocraqué issu des étapes c') et c") optionnelles, en amont de la section de lavage/séparation, de manière à dissoudre au moins en partie des sels de chlorure d'ammonium et/ou de l'acide chlorhydrique et améliorer ainsi l'élimination des impuretés chlorées et réduire les risques de bouchages dus à une accumulation des sels de chlorure d'ammonium.

L'étape d) de séparation est avantageusement opérée à une température comprise entre 50 et 450°C, préférentiellement entre 100 et 440°C, de manière préférée entre 200 et 420°C. Il est important d'opérer dans cette gamme de température (et donc de ne pas trop refroidir l'effluent de l'étape c) au risque de bouchage dans les lignes dû à la précipitation des sels de chlorure d'ammonium. Avantageusement, l'étape d) de séparation est opérée à une pression proche de celle mise en œuvre dans les étapes a), b) et/ou c), de préférence entre 1,0 et 20,0 MPa, de manière à faciliter le recyclage d'hydrogène.

La section de lavage/séparation de l'étape d) peut au moins en partie être réalisée dans des équipements de lavage et de séparation communs ou distincts, ces équipements étant bien connus (ballons séparateurs pouvant être opérés à différentes pressions et températures, pompes, échangeurs de chaleurs, colonnes de lavage, etc.).

Dans un mode de réalisation éventuel de l'invention, l'étape d) de séparation comprend l'injection d'une solution aqueuse dans l'effluent hydrotraité issu de l'étape c), suivi de la section de lavage/séparation comprenant avantageusement une phase de séparation permettant d'obtenir au moins un effluent aqueux chargé en sels d'ammonium, un effluent hydrocarboné liquide lavé et un effluent gazeux partiellement lavé. L'effluent aqueux chargé en sels d'ammonium et l'effluent hydrocarboné liquide lavé peuvent ensuite être séparés dans un ballon décanteur afin d'obtenir ledit effluent hydrocarboné et ledit effluent aqueux. Ledit effluent gazeux partiellement lavé peut parallèlement être introduit dans une colonne de lavage où il circule à contrecourant d'un flux aqueux, de préférence de même nature que la solution aqueuse injectée dans l'effluent hydrotraité, ce qui permet d'éliminer au moins en partie, de préférence en totalité, l'acide chlorhydrique et le $CO_2$ contenu dans l'effluent gazeux partiellement lavé et d'obtenir ainsi ledit effluent gazeux, comprenant de préférence essentiellement de l'hydrogène, et un flux aqueux acide. Ledit effluent aqueux issu du ballon décanteur peut éventuellement être mélangé avec ledit flux aqueux acide, et être utilisé, éventuellement en mélange avec ledit flux aqueux acide dans un circuit de recyclage d'eau pour alimenter l'étape d) de séparation en ladite solution aqueuse en amont de la section de lavage/séparation et/ou en ledit flux aqueux dans la colonne de lavage. Ledit circuit de recyclage d'eau peut comporter un appoint d'eau et/ou d'une solution basique et/ou une purge permettant d'évacuer les sels dissous.

La purification de l'effluent gazeux comprenant de l'hydrogène peut être réalisée par des techniques connues (purge, lavage aux amines, adsorption modulée en pression ou PSA pour pressure swing adsorption selon la terminologie anglo-saxonne, ...). De manière préférée, la purification de l'effluent gazeux comprenant de l'hydrogène est effectuée au moins au moyen d'une colonne de lavage aux amines permettant d'éliminer au moins en partie le dioxyde de carbone formé lors de la décarboxylation des fonctions esters d'origine renouvelable. La monoéthanolamine, la diéthanolamine et/ou la monodiéthanolamine sont des exemples d'amines pouvant être utilisées dans la colonne de lavage du gaz.

Dans un autre mode de réalisation éventuel de l'invention, l'étape d) de séparation peut comprendre avantageusement une section de lavage/séparation à « haute pression » qui opère à une pression proche de la pression de l'étape a) d'hydrogénation sélective et/ou de l'étape b) d'hydrodémétallation et/ou de l'étape c) d'hydrotraitement et/ou de l'étape c') d'hydrocraquage optionnelle, de préférence entre 1,0 et 20,0 MPa, afin de faciliter le recyclage d'hydrogène. Cette éventuelle section « haute pression » de l'étape d) peut être complétée par une section « basse pression », afin d'obtenir une fraction liquide hydrocarbonée dépourvue d'une partie des gaz dissous à haute pression et destinée à être traitée directement dans un procédé de vapocraquage ou optionnellement être envoyée dans l'étape e) de fractionnement.

La ou les fractions gaz issue(s) de l'étape d) de séparation peut (peuvent) faire l'objet de purification(s) et de séparation(s) complémentaire(s) en vue de récupérer au moins un gaz riche en hydrogène pouvant être recyclé en amont des étapes a) et/ou b) et/ou c) et/ou c') et/ou c") et/ou des hydrocarbures légers, notamment de l'éthane, du propane et du butane, qui peuvent avantageusement être envoyés séparément ou en mélange dans un ou des fours de l'étape f) de vapocraquage de manière à accroitre le rendement global en oléfines.

L'effluent hydrocarboné issu de l'étape d) de séparation est envoyé, en partie ou en totalité, soit directement en entrée d'une unité de vapocraquage, soit vers une étape e) optionnelle de fractionnement. De préférence, l'effluent liquide hydrocarboné est envoyé, en partie ou en totalité, de manière préférée en totalité, vers une étape e) de fractionnement.

**Etape e) (optionnelle) de fractionnement**

Le procédé selon l'invention peut comprendre une étape de fractionnement de tout ou partie, de manière préférée de la totalité, de l'effluent hydrocarboné issu de l'étape d), pour obtenir au moins un flux gazeux et au moins deux flux hydrocarbonés liquides, lesdits deux flux hydrocarbonés liquides étant au moins une coupe naphta comprenant des composés ayant un point d'ébullition inférieur ou égal à 175°C, en particulier entre 80 et 175°C, et une coupe hydrocarbonée comprenant des composés ayant un point d'ébullition supérieur à 175°C.

L'étape e) permet en particulier d'éliminer les gaz dissous dans l'effluent liquide hydrocarboné, comme par exemple de l'ammoniac, de l'hydrogène sulfuré et des hydrocarbures légers ayant 1 à 4 atomes de carbone.

L'étape e) optionnelle de fractionnement est avantageusement opérée à une pression inférieure ou égale à 1,0 MPa abs., de préférence entre 0,1 et 1,0 MPa abs.

Selon un mode de réalisation, l'étape e) peut être opérée dans une section comprenant avantageusement au moins une colonne de stripage équipée d'un circuit de reflux comprenant un ballon de reflux. Ladite colonne de stripage est alimentée par l'effluent liquide hydrocarboné issu de l'étape d) et par un flux de vapeur d'eau. L'effluent liquide hydrocarboné issu de l'étape d) peut être éventuellement réchauffé avant l'entrée dans la colonne de stripage. Ainsi, les composés les plus légers sont entrainés en tête de colonne et dans le circuit de reflux comprenant un ballon de reflux dans lequel s'opère une séparation gaz/liquide. La phase gazeuse qui comprend les hydrocarbures légers, est soutirée du ballon de reflux, en un flux gazeux. La coupe naphta comprenant des composés ayant un point d'ébullition inférieur ou égal à 175°C est avantageusement soutirée du ballon de reflux. La coupe hydrocarbonée comprenant des composés ayant un point d'ébullition supérieur à 175°C est avantageusement soutirée en fond de colonne de stripage.

Selon d'autres modes de réalisation, l'étape e) de fractionnement peut mettre en œuvre une colonne de stripage suivie d'une colonne de distillation ou uniquement une colonne de distillation.

La coupe naphta comprenant des composés ayant un point d'ébullition inférieur ou égal à 175°C et la coupe comprenant des composés ayant un point d'ébullition supérieur à 175°C, éventuellement mélangés, peu(ven)t être envoyés, en tout ou partie, vers une unité de vapocraquage, à l'issue de laquelle des oléfines pourront être (re)formées pour participer à la formation de polymères. De préférence, une partie seulement des dites coupes est envoyée vers une unité de vapocraquage ; au moins une fraction de la partie restante est éventuellement recyclée dans au moins une des étapes du procédé et/ou envoyée vers une unité de stockage carburant, par exemple une unité de stockage naphta, une unité de stockage diesel ou une unité de stockage kérosène, issu de charges pétrolières conventionnelles.

Selon un mode préféré, la coupe naphta comprenant des composés ayant un point d'ébullition inférieur ou égal à 175°C, tout ou partie, est envoyée vers une unité de vapocraquage, tandis que la coupe comprenant des composés ayant un point d'ébullition supérieur à 175°C est recyclée dans l'étape a) et/ou b) et/ou et/ou c) et/ou c'), et/ou envoyée vers une unité de stockage carburant.

Dans un mode de réalisation particulier, l'étape optionnelle e) de fractionnement peut permettre d'obtenir, outre un flux gazeux, une coupe naphta comprenant des composés ayant un point d'ébullition inférieur ou égal à 175°C, de préférence entre 80 et 175°C, et, une coupe diesel comprenant des composés ayant un point d'ébullition supérieur à 175°C et inférieur à 385°C, et une coupe hydrocarbonée comprenant des composés ayant un point d'ébullition supérieur ou égal à 385°C, dite coupe hydrocarbonée lourde. La coupe naphta peut être envoyée, en tout ou partie, vers une unité de vapocraquage et/ou vers le pool naphta issu de charges pétrolières conventionnelles, elle peut encore être recyclée; la coupe diesel peut également être, en tout ou partie, soit envoyée vers une unité de vapocraquage, soit vers un pool diesel issu de charges pétrolières conventionnelles, soit encore être recyclée ; la coupe lourde peut quant à elle être envoyée, au moins en partie, vers une unité de vapocraquage, ou être recyclée, notamment dans l'étape c') ou dans l'étape c").

Dans un autre mode de réalisation particulier la coupe naphta comprenant des composés ayant un point d'ébullition inférieur ou égal à 175°C issue de l'étape e) est fractionnée en une coupe naphta lourde comprenant des composés ayant un point d'ébullition entre 80 et 175°C et une coupe naphta légère comprenant des composés ayant un point d'ébullition inférieure à 80°C, au moins une partie de ladite coupe naphta lourde étant envoyée vers un complexe aromatique comportant au moins une étape de reformage du naphta en vue de produire des composés aromatiques. Selon ce mode de réalisation, au moins une partie de la coupe naphta légère est envoyée dans l'étape f) de vapocraquage décrite ci-dessous.

La ou les fractions gaz issue(s) de l'étape e) de fractionnement peut (peuvent) faire l'objet de purification(s) et de séparation(s) complémentaire(s) en vue de récupérer au moins des hydrocarbures légers, notamment de l'éthane, du propane et du butane, qui peuvent avantageusement être envoyés séparément ou en mélange dans un ou des fours de l'étape f) de vapocraquage de manière à accroitre le rendement global en oléfines.

**Recyclage de la coupe comprenant des composés ayant un point d'ébullition supérieur à 175°C.**

Au moins une fraction de la coupe comprenant des composés ayant un point d'ébullition supérieur à 175°C issue de l'étape e) de fractionnement peut être récupérée pour constituer un flux de recycle qui est envoyé en amont de ou directement vers au moins l'une des étapes réactionnelles du procédé selon l'invention, en particulier vers l'étape a) d'hydrogénation sélective et/ou b) d'hydrodémétallation et/ou l'étape c) d'hydrotraitement l'étape c') d'hydrocraquage et/ou l'étape c") d'hydrocraquage. Eventuellement, une fraction du flux de recycle peut être envoyée vers l'étape a0) optionnelle.

Le flux de recycle peut alimenter lesdites étapes réactionnelles a) et/ou b) et/ou c) et/ou c') et/ou c") en une seule injection ou peut être divisé en plusieurs fractions pour alimenter les étapes réactionnelles en plusieurs injections, c'est-à-dire au niveau de différents lits catalytiques.

Avantageusement, la quantité du flux de recycle de la coupe comprenant des composés ayant un point d'ébullition supérieur à 175°C est ajustée de sorte que le rapport pondéral entre le flux de recycle et la charge comprenant une huile de pyrolyse de plastiques et une charge de sources renouvelables, c'est-à-dire la charge à traiter alimentant le procédé global, est inférieur ou égal à 10, de préférence inférieur ou égal à 5, et préférentiellement supérieur ou égal à 0,001, de préférence supérieur ou égal à 0,01, et de manière préférée supérieur ou égal à 0,1. De manière très préférée, la quantité du flux de recycle est ajustée de sorte que le rapport pondéral entre le flux de recycle et la charge comprenant une huile de pyrolyse de plastiques et une charge de sources renouvelables est compris entre 0,2 et 5.

Selon une variante préférée, au moins une fraction de la coupe comprenant des composés ayant un point d'ébullition supérieur à 175°C issue de l'étape e) de fractionnement est envoyée dans l'étape c') d'hydrocraquage lorsqu'elle est présente.

Selon une autre variante préférée, au moins une fraction de la coupe comprenant des composés ayant un point d'ébullition supérieur à 175°C issue de l'étape e) de fractionnement est envoyée dans une deuxième étape c") d'hydrocraquage lorsqu'elle est présente.

Le recyclage d'une partie de la coupe comprenant des composés ayant un point d'ébullition supérieur à 175°C vers ou en amont d'au moins une des étapes réactionnelles du procédé selon l'invention, et notamment vers les étapes c') et/ou c') d'hydrocraquage permet avantageusement d'augmenter le rendement en coupe naphta ayant un point d'ébullition inférieur à 175°C. Le recyclage permet également de diluer les impuretés et d'autre part de contrôler la température dans la ou les étape(s) réactionnelle(s), dans la(les)quelle(s) des réactions mises en jeu peuvent être fortement exothermiques.

Une purge peut être installée sur le recycle de ladite de la coupe comprenant des composés ayant un point d'ébullition supérieur à 175°C. En fonction des conditions opératoires du procédé, ladite purge peut être comprise entre 0 et 10% poids de la coupe comprenant des composés ayant un point d'ébullition supérieur à 175°C par rapport à la charge entrante, et de préférence entre 0,5% et 5% poids.

**Recyclage de l'effluent hydrocarboné issu de l'étape d) et/ou de la coupe naphta ayant un point d'ébullition inférieur ou égal à 175°C issue de l'étape e)**

Une fraction de l'effluent hydrocarboné issu de l'étape d) de séparation ou une fraction de la coupe naphta ayant un point d'ébullition inférieur ou égal à 175°C issue de l'étape e) optionnelle de fractionnement, peut être récupérée pour constituer un flux de recycle qui est envoyé en amont de ou directement vers au moins l'une des étapes réactionnelles du procédé selon l'invention, en particulier vers l'étape a) d'hydrogénation sélective et/ou b) d'hydrodémétallation et/ou l'étape c) d'hydrotraitement. Eventuellement, une fraction du flux de recycle peut être envoyée vers l'étape a0) optionnelle de prétraitement.

De préférence, au moins une fraction de l'effluent hydrocarboné issu de l'étape d) de séparation ou de la coupe naphta ayant un point d'ébullition inférieur ou égal à 175°C issue de l'étape e) optionnelle de fractionnement alimente l'étape c) d'hydrotraitement.

Avantageusement, la quantité du flux de recycle, c'est-à-dire la fraction de produit obtenu recyclée, est ajustée de sorte que le rapport pondéral entre le flux de recycle et la charge comprenant une huile de pyrolyse de plastiques et une charge de source renouvelable, c'est-à-dire la charge à traiter alimentant le procédé global, est inférieur ou égal à 10, de préférence inférieur ou égal à 5, et préférentiellement supérieur ou égal à 0,001, de préférence supérieur ou égal à 0,01, et de manière préférée supérieur ou égal à 0,1. De manière très préférée, la quantité du flux de recycle est ajustée de sorte que le rapport pondéral entre le flux de recycle et la charge comprenant une huile de pyrolyse de plastiques et une charge de source renouvelable est compris entre 0,2 et 5.

Avantageusement, pour les phases de démarrage du procédé, une coupe hydrocarbonée externe au procédé peut être utilisée comme flux de recycle. L'Homme du métier saura alors choisir ladite coupe hydrocarbonée.

Le recyclage d'une partie du produit obtenu vers ou en amont de au moins une des étapes réactionnelles du procédé selon l'invention permet avantageusement d'une part de diluer les impuretés et d'autre part de contrôler la température dans la ou les étape(s) réactionnelle(s), dans la(les)quelle(s) des réactions mises en jeu peuvent être fortement exothermiques.

Ledit effluent hydrocarboné ou le(s)dit(s) flux hydrocarboné(s) ainsi obtenu(s) par traitement selon le procédé de l'invention d'une huile de pyrolyse de plastiques et une charge de source renouvelable, présente(nt) une composition compatible avec les spécifications d'une charge en entrée d'une unité de vapocraquage. En particulier, la composition de l'effluent hydrocarboné ou du(des)dit(s) flux hydrocarboné(s) est de préférence telle que :

- la teneur totale en éléments métalliques est inférieure ou égale à 5,0 ppm poids, de préférence inférieure ou égale à 2,0 ppm poids, préférentiellement inférieure ou égale à 1,0 ppm poids et de manière préférée inférieure ou égale à 0,5 ppm poids, avec :

  une teneur en élément silicium (Si) inférieure ou égale à 1,0 ppm poids, de préférence inférieure ou égale à 0,6 ppm poids, et
  une teneur en élément fer (Fe) inférieure ou égale à 100 ppb poids,

- la teneur en soufre est inférieure ou égale à 500 ppm poids, de préférence inférieure ou égale à 200 ppm poids,
- la teneur en oxygène est inférieure ou égale à 0,5% poids, de préférence inférieure à 0,1% poids,
- la teneur en azote est inférieure ou égale à 100 ppm poids, de préférence inférieure ou égale à 50 ppm poids et de manière préférée inférieure ou égale à 5 ppm poids
- la teneur en asphaltènes est inférieure ou égale à 5,0 ppm poids,
- la teneur totale en élément chlore est inférieure ou égale à 10 ppm poids, de manière préférée inférieure à 1,0 ppm poids,
- la teneur en composés oléfiniques (mono- et di-oléfines) est inférieure ou égale à 5,0% poids, de préférence inférieure ou égale à 2,0% poids, de manière préférée inférieure ou égale à 0,1% poids.

Les teneurs sont données en concentrations pondérales relatives, pourcentage (%) poids, partie(s) par million (ppm) poids ou partie(s) par milliard (ppb) poids, par rapport au poids total du flux considéré.

Le procédé selon l'invention permet donc de traiter ensemble les huiles de pyrolyse de plastiques et les charges issues de sources renouvelables pour obtenir un effluent qui peut être injecté, en tout ou partie, dans une unité de vapocraquage.

**Etape f) de vapocraquage (optionnelle)**

L'effluent hydrocarboné issu de l'étape d) de séparation, ou au moins l'un des deux flux hydrocarboné(s) liquides issu(s) de l'étape e) optionnelle, peut être en tout ou partie envoyé vers une étape f) de vapocraquage.

De manière avantageuse, la ou les fractions gaz issue(s) de l'étape d) de séparation et/ou e) de fractionnelle et contenant de l'éthane, du propane et du butane, peut (peuvent) en tout ou partie être également envoyé vers l'étape f) de vapocraquage.

Ladite étape f) de vapocraquage est avantageusement réalisée dans au moins un four de pyrolyse à une température comprise entre 700 et 900°C, de préférence entre 750 et 850°C, et à une pression comprise entre 0,05 et 0,3 MPa relatif. Le temps de séjour des composés hydrocarbonés est généralement inférieur ou égale à 1,0 seconde (noté s), de préférence compris entre 0,1 et 0,5 s. Avantageusement, de la vapeur d'eau est introduite en amont de l'étape f) de vapocraquage optionnelle et après la séparation (ou le fractionnement). La quantité d'eau introduite, avantageusement sous forme de vapeur d'eau, est avantageusement comprise entre 0,3 et 3,0 kg d'eau par kg de composés hydrocarbonés en entrée de l'étape f). De préférence, l'étape f) optionnelle est réalisée dans plusieurs fours de pyrolyse en parallèle de manière à adapter les conditions opératoires aux différents flux alimentant l'étape f) notamment issus de l'étape e), et aussi à gérer les temps de décokage des tubes. Un four comprend un ou plusieurs tubes disposés en parallèle. Un four peut également désigner un groupe de fours opérant en parallèle. Par exemple, un four peut être dédié au craquage de la coupe naphta comprenant des composés ayant un point d'ébullition inférieur ou égal à 175°C.

Les effluents des différents fours de vapocraquage sont généralement recombinés avant séparation en vue de constituer un effluent. Il est entendu que l'étape f) de vapocraquage comporte les fours de vapocraquage mais aussi les sous étapes associées au vapocraquage bien connues de l'Homme du métier. Ces sous étapes peuvent comporter notamment des échangeurs de chaleur, des colonnes et des réacteurs catalytiques et des recyclages vers les fours. Une colonne permet généralement de fractionner l'effluent en vue de récupérer au moins une fraction légère comprenant de l'hydrogène et des composés ayant 2 à 5 atomes de carbone, et une fraction comprenant de l'essence de pyrolyse, et éventuellement une fraction comprenant de l'huile de pyrolyse. Des colonnes permettent de séparer les différents constituants de la fraction légère de fractionnement afin de récupérer au moins une coupe riche en éthylène (coupe C2) et une coupe riche en propylène (coupe C3) et éventuellement une coupe riche en butènes (coupe C4). Les réacteurs catalytiques permettent notamment de réaliser des hydrogénations des coupes C2, C3 voire C4 et de l'essence de pyrolyse. Les composés saturés, notamment les composés saturés ayant 2 à 4 atomes de carbone sont avantageusement recyclés vers les fours de vapocraquage de manière à accroitre les rendements globaux en oléfines.

Cette étape f) de vapocraquage permet d'obtenir au moins un effluent contenant des oléfines comprenant 2, 3 et/ou 4 atomes de carbone (c'est-à-dire des oléfines en C2, C3 et/ou C4), à des teneurs satisfaisantes, en particulier supérieures ou égales à 30% poids, notamment supérieures ou égales 40% poids, voire supérieures ou égales 50% poids d'oléfines totales comprenant 2, 3 et 4 atomes de carbone par rapport au poids de l'effluent de vapocraquage considéré. Lesdites oléfines en C2, C3 et C4 peuvent ensuite être avantageusement utilisées comme monomères de polyoléfines.

Selon un mode de réalisation préféré de l'invention, le procédé de traitement d'une charge comprenant une huile de pyrolyse de plastiques et une charge issue de sources renouvelables comprend, de préférence consiste en, l'enchainement des étapes, et de préférence dans l'ordre donné :

b) d'hydrodémétallation, c) d'hydrotraitement, d) de séparation ou

b) d'hydrodémétallation, c) d'hydrotraitement, d) de séparation, e) de fractionnement ou

b) d'hydrodémétallation, c) d'hydrotraitement, d) de séparation, e) de fractionnement et recyclage de la coupe comprenant des composés ayant un point d'ébullition inférieur ou égal à 175°C à l'étape c) d'hydrotraitement pour produire un effluent dont au moins une partie est compatible pour un traitement dans une unité de vapocraquage.

Selon un autre mode de réalisation préféré de l'invention, le procédé de traitement d'une charge comprenant une huile de pyrolyse comprend, de préférence consiste en, l'enchainement des étapes, et de préférence dans l'ordre donné :

b) d'hydrodémétallation, c) d'hydrotraitement, c') d'hydrocraquage, d) de séparation ou

b) d'hydrodémétallation, c) d'hydrotraitement, c') d'hydrocraquage, d) de séparation, e) de fractionnement ou

b) d'hydrodémétallation, c) d'hydrotraitement, c') d'hydrocraquage, d) de séparation, e) de fractionnement et recyclage de la coupe comprenant des composés ayant un point d'ébullition supérieur à 175°C à l'étape c') d'hydrocraquage et/ou recyclage de la coupe comprenant des composés ayant un point d'ébullition inférieur ou égal à 175°C à l'étape c) d'hydrotraitement pour produire un effluent dont au moins une partie est compatible pour un traitement dans une unité de vapocraquage.

Tous les modes de réalisation peuvent comprendre et de préférence consistent en plus d'une étape de prétraitement a0).

Tous les modes de réalisation peuvent comprendre et de préférence consistent en plus d'une étape d'hydrogénation sélective a).

Tous les modes de réalisation peuvent comprendre et de préférence consistent en plus d'une étape de vapocraquage f).

### Méthodes d'analyse utilisées

Les méthodes d'analyses et/ou normes utilisées pour déterminer les caractéristiques des différents flux en particuliers de la charge à traiter et des effluents, sont connues de l'Homme du métier. Elles sont en particulier listées ci-dessous à titre de renseignements. D'autres méthodes réputées équivalentes peuvent aussi être utilisées, notamment des méthodes équivalentes IP, EN ou ISO :

*Tableau 1*

| Description | Méthodes |
|---|---|
| Masse volumique @15°C | ASTM D4052 |
| Teneur en Soufre | ISO 20846 |
| Teneur en Azote | ASTM D4629 |
| Indice d'acide | ASTM D664 |
| Nombre de Brome | ASTM D1159 |
| Teneur en Di-oléfines à partir de l'indice d'anhydride Maléique | Méthode MAV (1) |
| Teneur en Oxygénés | Combustion + Infra-rouge |
| Teneur en Paraffines | UOP990-11 |
| Teneur en Naphthènes et Oléfines | UOP990-11 |
| Teneur en Aromatiques | UOP990-11 |
| Teneur en Halogènes | ASTM D7359 |
| Teneur en Chlorure | ASTM D7536 |

(suite)

| Description | Méthodes |
|---|---|
| Teneur en Métaux : | ASTM D5185 |
| P | |
| Fe | |
| Si | |
| Na | |
| B | |
| Distillation simulée | ASTM D2887 |
| (1) Méthode MAV décrite dans l'article : C. López-García et al., Near Infrared Monitoring of Low Conjugated Diolefins Content in Hydrotreated FCC Gasoline Streams, Oil & Gas Science and Technology - Rev. IFP, Vol. 62 (2007), No. 1, pp. 57-68 | |

**LISTE DES FIGURES**

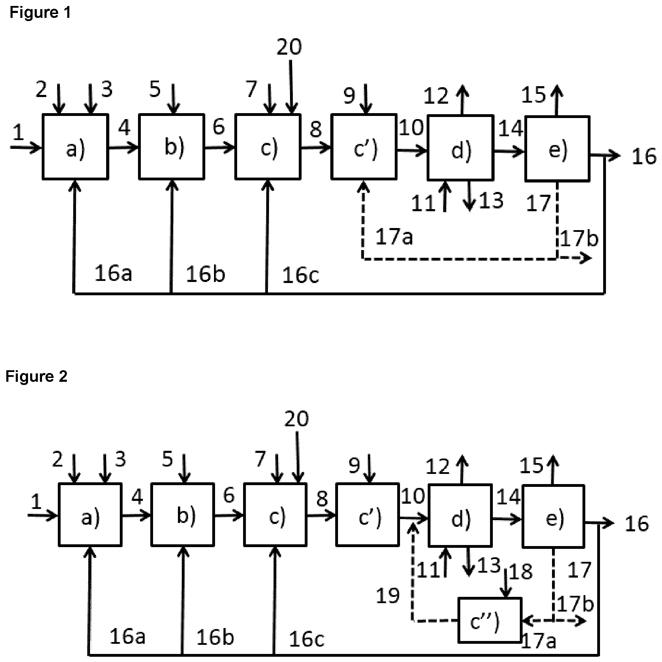

La mention des éléments référencés dans les Figures 1 à 2 permet une meilleure compréhension de l'invention, sans que celle-ci ne se limite aux modes de réalisation particuliers illustrés dans les Figures 1 à 2. Les différents modes de réalisation présentés peuvent être utilisés seul ou en combinaison les uns avec les autres, sans limitation de combinaison.

La Figure 1 représente le schéma d'un mode de réalisation particulier du procédé de la présente invention, comprenant :

- une étape a) d'hydrogénation sélective optionnelle d'une charge d'une charge comprenant une huile de pyrolyse de plastiques 1, en présence d'un gaz riche en hydrogène 2 et éventuellement d'une amine apportée par le flux 3, réalisée dans au moins un réacteur en lit fixe comportant au moins un catalyseur d'hydrogénation sélective, pour obtenir un effluent 4 ;

- une étape b) d'hydrodémétallation de l'effluent 4 issu de l'étape a), en présence d'hydrogène 5 réalisée dans au moins un réacteur en lit fixe comportant au moins un catalyseur d'hydrodémétallation, pour obtenir un effluent démétallé 6 ;

- une étape c) d'hydrotraitement d'au moins une partie de l'effluent issu de l'étape b), en présence d'hydrogène 7 réalisée dans au moins un réacteur en lit fixe comportant au moins un catalyseur d'hydrotraitement, pour obtenir un effluent hydrotraité 8 ;
et dans lequel une charge issue de sources renouvelables 20 est introduite dans l'étape c) d'hydrotraitement (cette charge peut aussi être introduite en partie ou en totalité dans les étapes a) et/ou b) (non représentées)),

- optionnellement une étape c') d'hydrocraquage d'au moins une partie de l'effluent 8 issu de l'étape c), en présence d'hydrogène 9 réalisée dans au moins un réacteur en lit fixe comportant au moins un catalyseur d'hydrocraquage, pour obtenir un effluent hydrotraité 10;

- une étape d) de séparation de l'effluent 10 réalisée en présence d'une solution aqueuse de lavage 11 et permettant d'obtenir au moins une fraction 12 comprenant de l'hydrogène, une fraction aqueuse 13 contenant des sels dissous, et une fraction liquide hydrocarbonée 14 ;

- optionnellement une étape d) de fractionnement de la fraction liquide hydrocarbonée 14 permettant d'obtenir au moins une fraction gazeuse 15, une coupe hydrocarbonée 16 comprenant des composés ayant un point d'ébullition inférieur ou égal à 175°C et une coupe hydrocarbonée 17 comprenant des composés ayant un point d'ébullition supérieur à 175°C.

A l'issue de l'étape d) ou e), au moins une partie de l'effluent hydrocarboné liquide hydrotraité 16 est envoyée(s) vers un procédé de vapocraquage (non représentée).

Optionnellement, une partie de ladite coupe hydrocarbonée 16 comprenant des composés ayant un point d'ébullition inférieur ou égal à 175°C constitue un flux de recycle 16a et/ou 16b et/ou 16c qui alimente les étapes a) et/ou b) et/ou c) respectivement.

Optionnellement, une partie de la coupe 17 comprenant des composés ayant un point d'ébullition supérieur à 175°C alimente l'étape c') d'hydrocraquage (fraction 17a), une autre partie 17b constitue la purge.

La Figure 2 représente le schéma d'un autre mode de réalisation particulier du procédé de la présente invention qui se base sur le schéma de la figure 1. Ce schéma comprend notamment une deuxième étape d'hydrocraquage c") dans laquelle la coupe 17 comprenant des composés ayant un point d'ébullition supérieur à 175°C issue de l'étape e) alimente cette une deuxième étape d'hydrocraquage c") (fraction 17a) qui est réalisée dans au moins un réacteur en lit fixe comportant au moins un catalyseur d'hydrocraquage et est alimentée en hydrogène 18. Le deuxième effluent hydrocraqué 19 est recyclé dans l'étape d) de séparation. L'autre partie de la coupe 17 constitue la purge 17b.

Au lieu d'injecter le flux d'amine 3 en entrée de l'étape a) d'hydrogénation sélective, il est possible de l'injecter en entrée des étapes b), c), c') et d) ou encore de ne pas l'injecter, en fonction des caractéristiques de la charge.

Seules les principales étapes, avec les flux principaux, sont représentées sur les Figures 1 à 2, afin de permettre une meilleure compréhension de l'invention. Il est bien entendu que tous les équipements nécessaires au fonctionnement sont présents (ballons, pompes, échangeurs, fours, colonnes, etc.), même si non représentés. Il est également entendu que des flux de gaz riche en hydrogène (appoint ou recycle), comme décrit ci-dessus, peuvent être injectés en entrée de chaque réacteur ou lit catalytique ou entre deux réacteurs ou deux lits catalytiques. Des moyens bien connus de l'homme du métier de purification et de recyclage d'hydrogène peuvent être également mis en œuvre.

**EXEMPLES**

**Exemple 1 (conforme à l'invention)**

La charge 1 traitée dans le procédé est une huile de pyrolyse de plastiques. La charge 2 traitée dans le procédé est une charge issue d'une source renouvelable (une huile de colza). L'huile de pyrolyse de plastiques est alimentée à l'étape b) d'hydrodémétallation. L'huile de colza est alimentée à l'étape c) d'hydrotraitement. Les caractéristiques des dites charges sont indiquées dans le tableau 2.

*Tableau 2 : caractéristiques des charges*

| Description | Méthodes | Unité | Charge 1 Huile de pyrolyse de plastiques | Charge 2 Huile de colza |
|---|---|---|---|---|
| Masse volumique @15 °C | ASTM D4052 | g/cm$^3$ | 0,7982 | 0,9201 |
| Teneur en soufre | ISO 20846 | ppm poids | 71 | 4 |
| Teneur en azote | ASTM D4629 | ppm poids | 871 | 18,4 |
| Teneur en Brome | ASTM D1159 | g/100g | 50 | 18,4 |
| Teneur en Oxygénés | Combustion + Infra-Rouge | % poids | 0.46 | 11 |
| Teneur en Chlorure | ASTM D7536 | ppm poids | 95 | 0 |
| Teneur en métaux : | | | | |
| Fer | ASTM | | 2 | <0.5 |
| P | D5185 | ppm poids | 6,27 | 10 |
| Si | | ppm poids | 22 | 0 |
| Distillation Simulée | | | | |
| 0% | | °C | 60,0 | 319,5 |
| 10% | | °C | 133,7 | 570,7 |
| 30% | ASTM | °C | 199,1 | 600,9 |
| 50% | D2887 | °C | 270,5 | 607,0 |

(suite)

| Description | Méthodes | Unité | Charge 1 Huile de pyrolyse de plastiques | Charge 2 Huile de colza |
|---|---|---|---|---|
| 70% | | °C | 334,7 | 611,7 |
| 90% | | °C | 403,4 | 616,0 |
| 100% | | °C | 574,5 | 660,6 |

La charge 1 est soumise à une étape b) d'hydrodémétallation réalisée en lit fixe et en présence d'hydrogène 5, et d'un catalyseur d'hydrodémétallation de type CoMo sur alumine dans les conditions présentées dans le tableau 3.

*Tableau 3 : conditions de l'étape b) d'hydrodémétallation*

| Température d'hydrodémétallation | °C | 300 |
|---|---|---|
| Pression Partielle d'Hydrogène | MPa abs | 3,1 |
| $H_2$/HC (Couverture volumique d'hydrogène par rapport au volume de charge) | $Nm^3/m^3$ | 300 |
| VVH (débit volumique de charge/volume de catalyseurs) | $h^{-1}$ | 1 |

Les caractéristiques de l'effluent issu de l'étape b) d'hydrodémétallation (qui correspond à l'effluent liquide 6) sont présentés tableau 4 :

*Tableau 4 : caractéristiques de l'effluent issu de l'étape b) d'hydrodémétallation*

| Description | Méthodes | Unité | Effluent issu de l'étape b) (6) |
|---|---|---|---|
| Masse volumique @ 15°C | ASTM D4052 | $g/cm^3$ | 0,7921 |
| Teneur en Soufre | ASTM D5453 | ppm poids | 37,8 |
| Teneur en azote | ASTM D4629 | ppm poids | 586,3 |
| Teneur en Brome | ASTM D1159 | g/100g | 20,13 |
| Teneur en Oxygénés | Combustion + Infra-Rouge | % poids | 0 |
| Teneur en Chlorure | ASTM D7536 | ppm poids | 4,7 |
| Teneur en métaux : | ASTM D5185 | | |
| Fer | | ppm poids | 1,4 |
| P | | ppm poids | 1,4 |
| Si | | ppm poids | <1 |

L'effluent 6 issu de l'étape b) d'hydrodémétallation est soumis à une étape c) d'hydrotraitement selon l'invention. La charge 2 issue de sources renouvelables 20 est également introduite dans l'étape c) d'hydrotraitement. La charge alimentée à l'étape c) d'hydrotraitement est un mélange constitué de 50 % poids de l'effluent issu de d'hydrodémétallation de l'huile de pyrolyse de plastiques et 50 % poids d'une huile de colza.

L'étape c) d'hydrotraitement est réalisée en lit fixe et en présence d'hydrogène 7, et d'un catalyseur d'hydrotraitement de type NiMo sur alumine dans les conditions présentées dans le tableau 5.

*Tableau 5 : conditions de l'étape c) d'hydrotraitement*

| Température d'hydrotraitement | °C | 310 |
|---|---|---|
| Pression Partielle d'Hydrogène | MPa abs | 5,1 |
| $H_2$/HC (Couverture volumique d'hydrogène par rapport au volume de charge) | $Nm^3/m^3$ | 700 |
| VVH (débit volumique de charge/volume de catalyseurs) | $h^{-1}$ | 0,5 |

L'effluent 8 issu de l'étape c) d'hydrotraitement est soumis à une étape d) de séparation selon l'invention dans laquelle un flux d'eau 11 est injecté dans l'effluent issu de l'étape c) d'hydrotraitement; le mélange est ensuite envoyé dans l'étape d) de séparation et est traité dans une colonne de lavage des gaz acides. Une fraction gaz est obtenue en tête de la colonne de lavage des gaz acides tandis qu'en fond, un ballon séparateur diphasique permet de séparer une phase aqueuse et une phase liquide. La colonne de lavage de gaz et le séparateur diphasique sont opérés à haute pression. La phase liquide est ensuite envoyée dans un ballon basse pression de manière à récupérer une seconde fraction gazeuse qui est purgée et un effluent liquide. Les rendements des différents produits et des différentes fractions obtenues en sortie de l'étape c) d'hydrotraitement sont indiqués dans le tableau 6 (les rendements étant correspondant aux rapports des quantités massiques des différents produits obtenus par rapport à la masse de charge, exprimés en pourcentage et notés % m/m).

*Tableau 6 : rendements des différents produits et fractions obtenus en sortie de l'étape c) d'hydrotraitement*

| $H_2S$ - $NH_3$ | % m/m | 0,1 |
|---|---|---|
| CO | % m/m | 0,1 |
| $CO_2$ | % m/m | 0,6 |
| $H_2O$ | % m/m | 4,0 |
| C1-C4 | % m/m | 2,7 |
| Fraction PI -180 °C | % m/m | 11,8 |
| Fraction 180 °C+ | % m/m | 82,8 |
| Total | % m/m | 102,0 |

Les caractéristiques de l'effluent issu de l'étape d) de séparation (qui correspond à l'effluent liquide 14) sont présentés tableau 7 :

*Tableau 7: caractéristiques de l'effluent 14 issu de l'étape d) de séparation.*

| Description | Méthodes | Unité | Effluent (14) |
|---|---|---|---|
| Masse volumique @ 15°C | ASTM D4052 | g/cm3 | 0,7908 |
| Teneur en Soufre | ASTM D5453 | ppm poids | 4,5 |
| Teneur en Azote | ASTM D4629 | ppm poids | 2,2 |
| Teneur en Brome | ASTM D1159 | g/100g | < 0,8 |
| Teneur en Oxygénés | Combustion + InfraRouge | % poids | < 0,1 |
| Teneur en Chlorure | ASTM D7536 | ppm poids | Non détecté |
| Teneur en Fer | ASTM D5185 | ppb poids | Non détecté |
| Teneur en métaux Totaux | | ppm poids | Non détecté |

L'effluent hydrocarboné 14 issu de l'étape d) de séparation présente une composition compatible avec une unité de vapocraquage puisque :

- elle ne contient pas d'oléfines (mono- et di-oléfines) ;
- elle ne contient pas de chlore (teneur non détectée et inférieure à la limite requise pour une charge de vapocraqueur)
- elle ne contient ni fer (Fe) ni métaux (teneurs en métaux non détectées et inférieures aux limites requises pour une charge de vapocraqueur soit ≤ 5,0 ppm poids et de manière très préférée ≤ 1 ppm poids pour les métaux ; et aussi ≤ 100 ppb poids pour le Fe) ;
- enfin elle contient peu de soufre (5,5 ppm poids) et peu d'azote (1,8 ppm poids), ces teneurs sont très inférieures aux limites requises pour une charge de vapocraqueur (≤ 500 ppm poids, de préférence ≤ 200 ppm poids pour S et N).

L'effluent 14 issu de l'étape d) de séparation est constituée d'environ 11,8 % de composés de type naphta ayant un point d'ébullition inférieure ou égal à 180°C.

L'effluent 14 peut être envoyé directement vers une étape f) de vapocraquage.

**Revendications**

1. Procédé de traitement d'une charge comprenant une huile de pyrolyse de plastiques et une charge issue de sources renouvelables comprenant :

   a) optionnellement, une étape d'hydrogénation sélective mise en œuvre dans une section réactionnelle alimentée au moins par ladite charge comprenant une huile de pyrolyse de plastiques et un flux gazeux comprenant de l'hydrogène, en présence d'au moins un catalyseur d'hydrogénation sélective, à une température entre 80 et 280°C, une pression partielle d'hydrogène entre 1,0 et 20,0 MPa abs. et une vitesse volumique horaire entre 0,3 et 10,0 h$^{-1}$, pour obtenir un effluent hydrogéné,
   b) une étape d'hydrodémétallation mise en œuvre dans une section réactionnelle d'hydrodémétallation comprenant au moins un catalyseur d'hydrodémétallation, ladite section réactionnelle d'hydrodémétallation étant alimentée au moins par ladite charge comprenant une huile de pyrolyse de plastiques et/ou l'effluent hydrogéné issu de l'étape a), et un flux gazeux comprenant de l'hydrogène, ladite section réactionnelle d'hydrodémétallation étant mise en œuvre à une température moyenne entre 140 et 400°C, une pression partielle d'hydrogène entre 1,0 et 20,0 MPa abs. et une vitesse volumique horaire entre 0,1 et 10,0 h$^{-1}$, pour obtenir un effluent démétallé,
   c) une étape d'hydrotraitement mise en œuvre dans une section réactionnelle d'hydrotraitement comprenant au moins un catalyseur d'hydrotraitement, ladite section réactionnelle d'hydrotraitement étant alimentée au moins par ledit effluent démétallé issu de l'étape b), et un flux gazeux comprenant de l'hydrogène, ladite section réactionnelle d'hydrotraitement étant mise en œuvre à une température entre 250 et 450°C, une pression partielle d'hydrogène entre 1,0 et 20,0 MPa abs. et une vitesse volumique horaire entre 0,1 et 10,0 h$^{-1}$,

   et dans lequel ladite charge issue de sources renouvelables est introduite en mélange ou non avec ladite charge comprenant une huile de pyrolyse de plastiques dans l'étape a) et/ou dans l'étape b) et/ou dans l'étape c),
   le ratio massique entre le débit de charge comprenant l'huile de pyrolyse de plastiques et le débit de charge issue de sources renouvelables introduit étant compris entre 0,05 et 20,

   c') optionnellement une étape d'hydrocraquage mise en œuvre dans une section réactionnelle d'hydrocraquage comprenant au moins un catalyseur d'hydrocraquage, ladite section réactionnelle d'hydrocraquage étant alimentée au moins par ledit effluent hydrotraité issu de l'étape c) et/ou par la coupe comprenant des composés ayant un point d'ébullition supérieur à 175°C issue de l'étape e) et un flux gazeux comprenant de l'hydrogène, ladite section réactionnelle d'hydrocraquage étant mise en œuvre à une température entre 250 et 450°C, une pression partielle d'hydrogène entre 1,5 et 20,0 MPa abs. et une vitesse volumique horaire entre 0,1 et 10,0 h$^{-1}$, pour obtenir un effluent hydrocraqué qui est envoyé dans l'étape d) de séparation,
   d) une étape de séparation, alimentée par l'effluent hydrotraité issu de l'étape c) et/ou par l'effluent hydrocraqué issu de l'étape c') et une solution aqueuse, ladite étape étant opérée à une température entre 50 et 450°C, pour obtenir au moins un effluent gazeux, un effluent aqueux et un effluent hydrocarboné,
   e) optionnellement une étape de fractionnement de tout ou partie de l'effluent hydrocarboné issu de l'étape d), pour obtenir au moins un effluent gazeux et au moins une coupe comprenant des composés ayant un point d'ébullition inférieur ou égal à 175°C et une coupe hydrocarbonée comprenant des composés ayant un point d'ébullition supérieur à 175°C.

2. Procédé selon la revendication précédente comprenant l'étape e) de fractionnement.

3. Procédé selon l'une des revendications précédentes comprenant l'étape c') d'hydrocraquage.

4. Procédé selon l'une des revendications précédentes comprenant ladite étape a) d'hydrogénation sélective.

5. Procédé selon l'une des revendications précédentes, dans lequel la charge issue de sources renouvelables est une charge comprenant une huile et/ou une graisse d'origine végétale et/ou animale.

6. Procédé selon l'une des revendications précédentes, dans lequel au moins une partie de la charge issue de ressources renouvelables est introduite dans l'étape c).

7. Procédé selon l'une des revendications précédentes, dans lequel la température de la section réactionnelle de l'étape c) est supérieure à la température de la section réactionnelle d'hydrodémétallation de l'étape b).

**8.** Procédé selon l'une des revendications précédentes, dans lequel au moins une fraction de l'effluent hydrocarboné issu de l'étape d) de séparation ou au moins une fraction de la coupe comprenant des composés ayant un point d'ébullition inférieur ou égal à 175°C issue de l'étape e) de fractionnement est envoyée en tant que flux de recycle vers l'étape a) d'hydrogénation sélective et/ou l'étape b) d'hydrodémétallation et/ou l'étape c) d'hydrotraitement.

**9.** Procédé selon l'une des revendications précédentes, dans lequel au moins une fraction de la coupe comprenant des composés ayant un point d'ébullition supérieur à 175°C issue de l'étape e) de fractionnement est envoyée en tant que flux de recycle vers l'étape b) d'hydrodémétallation, et/ou l'étape c) d'hydrotraitement et/ou l'étape c') d'hydrocraquage.

**10.** Procédé selon l'une des revendications 8 ou 9, dans lequel le rapport pondéral entre le flux de recycle et la charge comprenant une huile de pyrolyse de plastiques et une charge de sources renouvelables est inférieur ou égal à 10.

**11.** Procédé selon l'une des revendications précédentes, comprenant une étape a0) de prétraitement de la charge, ladite étape de prétraitement étant mise en œuvre en amont de l'étape a) d'hydrogénation sélective et comprenant une étape de filtration et/ou une étape de séparation électrostatique et/ou une étape d'un lavage à l'aide d'une solution aqueuse et/ou une étape d'adsorption.

**12.** Procédé selon l'une des revendications précédentes, dans lequel l'effluent hydrocarboné issu de l'étape d) de séparation, ou au moins l'un des deux flux hydrocarboné(s) liquides issu(s) de l'étape e), est en tout ou partie envoyé vers une étape f) de vapocraquage réalisée dans au moins un four de pyrolyse à une température comprise entre 700 et 900°C et à une pression comprise entre 0,05 et 0,3 MPa relatif.

**13.** Procédé selon l'une des revendications précédentes dans lequel ledit catalyseur d'hydrogénation sélective comprend un support choisi parmi l'alumine, la silice, les silices-alumines, la magnésie, les argiles et leurs mélanges et une fonction hydro-déshydrogénante comprenant soit au moins un élément du groupe VIII et au moins un élément du groupe VIB, soit au moins un élément du groupe VIII.

**14.** Procédé selon l'une des revendications précédentes dans lequel ledit catalyseur d'hydrodémétallation et ledit catalyseur d'hydrotraitement comprend un support choisi dans le groupe constitué par l'alumine, la silice, les silices-alumines, la magnésie, les argiles et leurs mélanges, et une fonction hydro-déshydrogénante comprenant au moins un élément du groupe VIII et/ou au moins un élément du groupe VIB.

**15.** Procédé selon l'une des revendications précédentes, lequel comprend en outre une deuxième étape d'hydrocraquage c") mise en œuvre dans une section réactionnelle d'hydrocraquage comprenant au moins un catalyseur d'hydrocraquage, ladite section réactionnelle d'hydrocraquage étant alimentée par la coupe comprenant des composés ayant un point d'ébullition supérieur à 175°C issue de l'étape e) et un flux gazeux comprenant de l'hydrogène, ladite section réactionnelle d'hydrocraquage étant mise en œuvre à une température entre 250 et 450°C, une pression partielle d'hydrogène entre 1,5 et 20,0 MPa abs. et une vitesse volumique horaire entre 0,1 et 10,0 h$^{-1}$, pour obtenir un effluent hydrocraqué qui est envoyé dans l'étape d) de séparation.

**16.** Procédé selon l'une des revendications précédentes, dans lequel ledit catalyseur d'hydrocraquage comprend un support choisi parmi les alumines halogénées, les combinaisons d'oxydes de bore et d'aluminium, les silice-alumines amorphes et les zéolithes et une fonction hydro-déshydrogénante comprenant au moins un métal du groupe VIB choisi parmi le chrome, le molybdène et le tungstène, seul ou en mélange, et/ou au moins un métal du groupe VIII choisi parmi le fer, le cobalt, le nickel, le ruthénium, le rhodium, le palladium et le platine.

**17.** Procédé selon l'une des revendications précédentes, dans lequel la charge a les propriétés suivantes :

- une teneur en aromatiques comprise entre 0 et 90 % poids,
- une teneur en halogénés comprise entre 2 et 5000 ppm poids,
- une teneur en éléments métalliques comprise entre 10 et 10000 ppm poids,
- dont une teneur en élément fer comprise entre 0 et 100 ppm poids,
- une teneur en élément silicium comprise entre 0 et 1000 ppm poids.

**Patentansprüche**

1. Verfahren zur Behandlung eines ein Pyrolyseöl aus Kunststoffen umfassenden Einsatzmaterials und eines Einsatzmaterials aus erneuerbaren Quellen, umfassend:

   a) optional, einen Schritt zur selektiven Hydrierung, der in einem Reaktionsabschnitt, dem mindestens das ein Pyrolyseöl aus Kunststoffen umfassende Einsatzmaterial und ein Wasserstoff umfassender gasförmiger Strom zugeführt werden, in Gegenwart von mindestens einem Katalysator für die selektive Hydrierung bei einer Temperatur zwischen 80 und 280 °C, einem Wasserstoffpartialdruck zwischen 1,0 und 20,0 MPa abs. und einer Raumgeschwindigkeit zwischen 0,3 und 10,0 $h^{-1}$, durchgeführt wird, um einen hydrierten Austrag zu erhalten,
   b) einen Hydrodemetallisierungsschritt, der in einem Hydrodemetallisierungsreaktionsabschnitt durchgeführt wird, der mindestens einen Hydrodemetallisierungskatalysator umfasst, wobei dem Hydrodemetallisierungsreaktionsabschnitt mindestens das ein Pyrolyseöl aus Kunststoffen umfassende Einsatzmaterial und/oder der hydrierte Austrag aus dem Schritt a) und ein Wasserstoff umfassender gasförmiger Strom zugeführt werden, wobei der Hydrodemetallisierungsreaktionsabschnitt bei einer mittleren Temperatur zwischen 140 und 400 °C, einem Wasserstoffpartialdruck zwischen 1,0 und 20,0 MPa abs. und einer Raumgeschwindigkeit zwischen 0,1 und 10,0 $h^{-1}$ betrieben wird, um einen demetallisierten Austrag zu erhalten,
   c) einen Hydrotreating-Schritt, der in einem Hydrotreating-Reaktionsabschnitt durchgeführt wird, der mindestens einen Hydrotreating-Katalysator umfasst, wobei dem Hydrotreating-Reaktionsabschnitt mindestens der demetallisierte Austrag aus dem Schritt b) und ein Wasserstoff umfassender gasförmiger Strom zugeführt werden, wobei der Hydrotreating-Reaktionsabschnitt bei einer Temperatur zwischen 250 und 450 °C, einem Wasserstoffpartialdruck zwischen 1,0 und 20,0 MPa **abs.** und einer Raumgeschwindigkeit zwischen 0,1 und 10,0 $h^{-1}$ betrieben wird,
   und wobei das Einsatzmaterial aus erneuerbaren Quellen im Gemisch oder nicht im Gemisch mit dem ein Pyrolyseöl aus Kunststoffen umfassenden Einsatzmaterial in den Schritt a) und/oder in den Schritt b) und/oder in den Schritt c) eingeleitet wird,
   wobei das Massenverhältnis zwischen dem Volumenstrom des das Pyrolyseöl aus Kunststoffen umfassenden Einsatzmaterials und dem Volumenstrom des Einsatzmaterials aus erneuerbaren Quellen zwischen 0,05 und 20 beträgt,
   c') optional, einen Hydrocracking-Schritt, der in einem Hydrocracking-Reaktionsabschnitt durchgeführt wird, der mindestens einen Hydrocracking-Katalysator umfasst, wobei dem Hydrocracking-Reaktionsabschnitt mindestens der per Hydrotreating behandelte Austrag aus dem Schritt c) und/oder die Verbindungen mit einem Siedepunkt über 175 °C umfassende Fraktion aus dem Schritt e) und ein Wasserstoff umfassender gasförmiger Strom zugeführt werden, wobei der Hydrocracking-Reaktionsabschnitt bei einer Temperatur zwischen 250 und 450 °C, einem Wasserstoffpartialdruck zwischen 1,5 und 20,0 MPa abs. und einer Raumgeschwindigkeit zwischen 0,1 und 10,0 $h^{-1}$ betrieben wird, um einen per Hydrocracking behandelten Austrag zu erhalten, der in den Trennschritt d) geleitet wird,
   d) einen Trennschritt, dem der per Hydrotreating behandelte Austrag aus dem Schritt c) und/oder der per Hydrocracking behandelte Austrag aus dem Schritt c') und eine wässrige Lösung zugeführt werden, wobei der Schritt bei einer Temperatur zwischen 50 und 450 °C durchgeführt wird, um mindestens einen gasförmigen Austrag, einen wässrigen Austrag und einen Kohlenwasserstoffaustrag zu erhalten,
   e) optional, einen Schritt zur Fraktionierung des gesamten oder eines Teils des Kohlenwasserstoffaustrags aus dem Schritt d), um mindestens einen gasförmigen Austrag und mindestens eine Verbindungen mit einem Siedepunkt kleiner oder gleich 175 °C umfassende Fraktion und eine Verbindungen mit einem Siedepunkt über 175 °C umfassende Kohlenwasserstofffraktion zu erhalten.

2. Verfahren nach dem vorhergehenden Anspruch, das den Schritt e) zur Fraktionierung umfasst.

3. Verfahren nach einem der vorhergehenden Ansprüche, das den Hydrocracking-Schritt c') umfasst.

4. Verfahren nach einem der vorhergehenden Ansprüche, das den Schritt a) zur selektiven Hydrierung umfasst.

5. Verfahren nach einem der vorhergehenden Ansprüche, wobei das Einsatzmaterial aus erneuerbaren Quellen ein Einsatzmaterial ist, das ein Öl und/oder ein Fett pflanzlichen und/oder tierischen Ursprungs umfasst.

6. Verfahren nach einem der vorhergehenden Ansprüche, wobei der mindestens eine Teil des Einsatzmaterials aus erneuerbaren Ressourcen in den Schritt c) eingeleitet wird.

7. Verfahren nach einem der vorhergehenden Ansprüche, wobei die Temperatur des Reaktionsabschnitts des Schritts c) höher als die Temperatur des Hydrodemetallisierungsreaktionsabschnitts des Schritts b) ist.

8. Verfahren nach einem der vorhergehenden Ansprüche, wobei mindestens ein Anteil des Kohlenwasserstoffaustrags aus dem Trennschritt d) oder mindestens ein Anteil der Verbindungen mit einem Siedepunkt kleiner oder gleich 175 °C umfassenden Fraktion aus dem Fraktionierungsschritt e) als Rückführstrom zum Schritt a) zur selektiven Hydrierung und/oder zum Hydrodemetallisierungsschritt b) und/oder zum Hydrotreating-Schritt c) geleitet wird.

9. Verfahren nach einem der vorhergehenden Ansprüche, wobei mindestens ein Anteil der Verbindungen mit einem Siedepunkt kleiner oder gleich 175 °C umfassenden Fraktion aus dem Fraktionierungsschritt e) als Rückführstrom zum Hydrodemetallisierungsschritt b) und/oder zum Hydrotreating-Schritt c) und/oder zum Hydrocracking-Schritt c') geleitet wird.

10. Verfahren nach einem der Ansprüche 8 oder 9, wobei das Gewichtsverhältnis zwischen dem Rückführstrom und dem Einsatzmaterial, das ein Pyrolyseöl aus Kunststoffen und ein Einsatzmaterial aus erneuerbaren Quellen umfasst, kleiner oder gleich 10 ist.

11. Verfahren nach einem der vorhergehenden Ansprüche, umfassend einen Schritt a0) zur Vorbehandlung des Einsatzmaterials, wobei der Schritt zur Vorbehandlung stromauf des Schritt a) zur selektiven Hydrierung durchgeführt wird und einen Schritt zur Filtration und/oder einen Schritt zur elektrostatischen Trennung und/oder einen Schritt zu einem Waschen mithilfe einer wässrigen Lösung und/oder einen Adsorptionsschritt umfasst.

12. Verfahren nach einem der vorhergehenden Ansprüche, wobei der Kohlenwasserstoffaustrag aus dem Trennschritt d) oder mindestens einer der beiden flüssigen Kohlenwasserstoffströme aus dem Schritt e) vollständig oder teilweise zu einem Steamcracking-Schritt f) geleitet wird, der in mindestens einem Pyrolyseofen bei einer Temperatur zwischen 700 und 900 °C und bei einem Relativdruck zwischen 0,05 und 0,3 MPa durchgeführt wird.

13. Verfahren nach einem der vorhergehenden Ansprüche, wobei der Katalysator zur selektiven Hydrierung einen Träger umfasst, der aus Aluminiumoxid, Siliciumdioxid, Siliciumoxid-Aluminiumoxiden, Magnesiumoxid, Tonen und ihren Mischungen ausgewählt ist, und eine hydrierend-dehydrierende Funktion, die entweder mindestens ein Element der Gruppe VIII und mindestens ein Element der Gruppe VIB oder mindestens ein Element der Gruppe VIII umfasst.

14. Verfahren nach einem der vorhergehenden Ansprüche, wobei der Hydrodemetallisierungskatalysator und der Hydrotreating-Katalysator einen Träger umfassen, der aus der aus Aluminiumoxid, Siliciumdioxid, Siliciumoxid-Aluminiumoxiden, Magnesiumoxid, Tonen und ihren Mischungen bestehenden Gruppe ausgewählt ist, und eine hydrierend-dehydrierende Funktion, die mindestens ein Element der Gruppe VIII und/oder mindestens ein Element der Gruppe VIB umfasst.

15. Verfahren nach einem der vorhergehenden Ansprüche, das ferner einen zweiten Hydrocracking-Schritt c") umfasst, der in einem Hydrocracking-Reaktionsabschnitt durchgeführt wird, der mindestens einen Hydrocracking-Katalysator umfasst, wobei dem Hydrocracking-Reaktionsabschnitt die Verbindungen mit einem Siedepunkt über 175 °C umfassende Fraktion aus dem Schritt e) und ein Wasserstoff umfassender gasförmiger Strom zugeführt werden, wobei der Hydrocracking-Reaktionsabschnitt bei einer Temperatur zwischen 250 und 450 °C, einem Wasserstoffpartialdruck zwischen 1,5 und 20,0 MPa abs. und einer Raumgeschwindigkeit zwischen 0,1 und 10,0 $h^{-1}$ betrieben wird, um einen per Hydrocracking behandelten Austrag zu erhalten, der in den Trennschritt d) geleitet wird.

16. Verfahren nach einem der vorhergehenden Ansprüche, wobei der Hydrocracking-Katalysator einen Träger umfasst, der aus halogenierten Aluminiumoxiden, Kombinationen aus Bor- und Aluminiumoxiden, amorphen Siliciumoxid-Aluminiumoxiden und Zeolithen ausgewählt ist, und eine hydrierend-dehydrierende Funktion, die mindestens ein Metall der Gruppe VIB, das aus Chrom, Molybdän und Wolfram, allein oder gemischt, ausgewählt ist, und/oder mindestens ein Metall der Gruppe VIII, das aus Eisen, Cobalt, Nickel, Ruthenium, Rhodium, Palladium und Platin ausgewählt ist, umfasst.

17. Verfahren nach einem der vorhergehenden Ansprüche, bei dem das Einsatzmaterial die folgenden Eigenschaften aufweist:

   - einen Gehalt an Aromaten zwischen 0 und 90 Gew.-%,
   - einen Gehalt an Halogenen zwischen 2 und 5000 Gew.-ppm,

- einen Gehalt an metallischen Elementen zwischen 10 und 10000 Gew.-ppm,
- darunter einen Gehalt an dem Element Eisen zwischen 0 und 100 Gew.-ppm,
- einen Gehalt an dem Element Silicium zwischen 0 und 1000 Gew.-ppm.

**Claims**

1. Process for treating a feedstock comprising a plastics pyrolysis oil and a feedstock derived from renewable sources, comprising:

   a) optionally, a selective hydrogenation step performed in a reaction section fed at least with said feedstock comprising a plastics pyrolysis oil and a gas stream comprising hydrogen, in the presence of at least one selective hydrogenation catalyst, at a temperature of between 80 and 280°C, a partial pressure of hydrogen of between 1.0 and 20.0 MPa abs., and an hourly space velocity of between 0.3 and 10.0 $h^{-1}$, to obtain a hydrogenated effluent,
   b) a hydrodemetallization step performed in a hydrodemetallization reaction section comprising at least one hydrodemetallization catalyst, said hydrodemetallization reaction section being fed at least with said feedstock comprising a plastics pyrolysis oil and/or the hydrogenated effluent obtained from step a), and a gas stream comprising hydrogen, said hydrodemetallization reaction section being used at an average temperature of between 140 and 400°C, a partial pressure of hydrogen of between 1.0 and 20.0 Mpa abs., and an hourly space velocity of between 0.1 and 10.0 $h^{-1}$, to obtain a demetallized effluent,
   c) a hydrotreatment step performed in a hydrotreatment reaction section comprising at least one hydrotreatment catalyst, said hydrotreatment reaction section being fed at least with said demetallized effluent obtained from step b) and a gas stream comprising hydrogen, said hydrotreatment reaction section being used at a temperature of between 250 and 450°C, a partial pressure of hydrogen of between 1.0 and 20.0 MPa abs., and an hourly space velocity of between 0.1 and 10.0 $h^{-1}$,
   and in which said feedstock derived from renewable sources is introduced optionally as a mixture with said feedstock comprising a plastics pyrolysis oil in step a) and/or in step b) and/or in step c),
   the weight ratio between the flow rate of feedstock comprising the plastics pyrolysis oil and the flow rate of feedstock derived from renewable sources introduced being between 0.05 and 20,
   c') optionally, a hydrocracking step performed in a hydrocracking reaction section comprising at least one hydrocracking catalyst, said hydrocracking reaction section being fed at least with said hydrotreated effluent obtained from step c) and/or with the cut comprising compounds having a boiling point greater than 175°C obtained from step e) and a gas stream comprising hydrogen, said hydrocracking reaction section being used at a temperature of between 250 and 450°C, a partial pressure of hydrogen of between 1.5 and 20.0 MPa abs., and an hourly space velocity of between 0.1 and 10.0 $h^{-1}$, to obtain a hydrocracked effluent which is sent into the separation step d),
   d) a separation step, fed with the hydrotreated effluent obtained from step c) and/or with the hydrocracked effluent obtained from step c') and an aqueous solution, said step being performed at a temperature of between 50 and 450°C, to obtain at least one gaseous effluent, an aqueous effluent and a hydrocarbon-based effluent,
   e) optionally a step of fractionating all or a part of the hydrocarbon-based effluent obtained from step d), to obtain at least one gaseous effluent and at least one cut comprising compounds with a boiling point of less than or equal to 175°C and one hydrocarbon cut comprising compounds with a boiling point of greater than 175°C.

2. Process according to the preceding claim, comprising the fractionation step e).

3. Process according to either of the preceding claims, comprising the hydrocracking step c').

4. Process according to one of the preceding claims, comprising said selective hydrogenation step a).

5. Process according to one of the preceding claims, in which the feedstock derived from renewable sources is a feedstock comprising an oil and/or a fat of plant and/or animal origin.

6. Process according to one of the preceding claims, in which at least a part of the feedstock derived from renewable resources is introduced in step c).

7. Process according to one of the preceding claims, in which the temperature of the reaction section of step c) is higher than the temperature of the hydrodemetallization reaction section of step b).

8. Process according to one of the preceding claims, in which at least one fraction of the hydrocarbon-based effluent obtained from the separation step d) or at least one fraction of the cut comprising compounds with a boiling point of less than or equal to 175°C obtained from the fractionation step e) is sent, as recycle stream, to the selective hydrogenation step a) and/or the hydrodemetallization step b) and/or the hydrotreatment step c).

9. Process according to one of the preceding claims, in which at least one fraction of the cut comprising compounds with a boiling point of greater than 175°C obtained from the fractionation step e) is sent, as recycle stream, to the hydrodemetallization step b) and/or the hydrotreatment step c) and/or the hydrocracking step c').

10. Process according to either of Claims 8 and 9, in which the weight ratio between the recycle stream and the feedstock comprising a plastics pyrolysis oil and a feedstock from renewable sources is less than or equal to 10.

11. Process according to one of the preceding claims, comprising a step a0) of pretreatment of the feedstock, said pretreatment step being carried out upstream of the selective hydrogenation step a) and comprising a filtration step and/or an electrostatic separation step and/or a step of washing by means of an aqueous solution and/or an adsorption step.

12. Process according to one of the preceding claims, in which the hydrocarbon-based effluent obtained from the separation step d), or at least one of the two liquid hydrocarbon-based streams obtained from step e), is totally or partly sent to a steam cracking step f) performed in at least one pyrolysis furnace at a temperature of between 700 and 900°C and at a pressure of between 0.05 and 0.3 MPa relative.

13. Process according to one of the preceding claims, in which said selective hydrogenation catalyst comprises a support chosen from alumina, silica, silica-aluminas, magnesia, clays and mixtures thereof and a hydro-dehydrogenating function comprising either at least one group VIII element and at least one group VIB element, or at least one group VIII element.

14. Process according to one of the preceding claims, in which said hydrodemetallization catalyst and said hydrotreatment catalyst comprise a support chosen from the group consisting of alumina, silica, silica-aluminas, magnesia, clays and mixtures thereof and a hydro-dehydrogenating function comprising at least one group VIII element and/or at least one group VIB element.

15. Process according to one of the preceding claims, which also comprises a second hydrocracking step c") performed in a hydrocracking reaction section comprising at least one hydrocracking catalyst, said hydrocracking reaction section being fed with the cut comprising compounds having a boiling point greater than 175°C obtained from step e) and a gas stream comprising hydrogen, said hydrocracking reaction section being used at a temperature of between 250 and 450°C, a partial pressure of hydrogen of between 1.5 and 20.0 MPa abs., and an hourly space velocity of between 0.1 and 10.0 $h^{-1}$, to obtain a hydrocracked effluent which is sent into the separation step d).

16. Process according to one of the preceding claims, in which said hydrocracking catalyst comprises a support chosen from halogenated aluminas, combinations of boron and aluminium oxides, amorphous silica-aluminas and zeolites and a hydro-dehydrogenating function comprising at least one group VIB metal chosen from chromium, molybdenum and tungsten, alone or as a mixture, and/or at least one group VIII metal chosen from iron, cobalt, nickel, ruthenium, rhodium, palladium and platinum.

17. Process according to one of the preceding claims, in which the feedstock has the following properties:

- a content of aromatic compounds of between 0 and 90% by weight,
- a content of halogenated compounds of between 2 and 5000 ppm by weight,
- a content of metallic elements of between 10 and 10 000 ppm by weight,
- including a content of iron element of between 0 and 100 ppm by weight,
- a content of silicon element of between 0 and 1000 ppm by weight.

Figure 1

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018055555 A
- FR 2001758
- FR 2910017
- WO 2014001632 A
- FR 2681871
- FR 3051375
- FR 2969642
- EP 0113297 A
- EP 0113284 A
- US 5221656 A
- US 5827421 A
- US 7119045 B
- US 5622616 A
- US 5089463 A
- CN 102051202
- US 2007080099 A
- US 6589908 B
- US 4818743 A
- US 6332976 B

**Littérature non-brevet citée dans la description**

- **D.R. LIDE**. CRC Handbook of Chemistry and Physics. CRC press, 2000
- *The Journal of the American Chemical Society*, 1938, vol. 6Q, 309
- **C. LÓPEZ-GARCÍA et al.** Near Infrared Monitoring of Low Conjugated Diolefins Content in Hydrotreated FCC Gasoline Streams. *Oil & Gas Science and Technology - Rev. IFP*, 2007, vol. 62 (1), 57-68